(19) Europäisches Patentamt

European Patent Office

Office européen des brevets

(11) EP 1 208 170 B1

(12) EUROPÄISCHE PATENTSCHRIFT

(45) Veröffentlichungstag und Bekanntmachung des Hinweises auf die Patenterteilung:
02.11.2006 Patentblatt 2006/44

(21) Anmeldenummer: 00951525.5

(22) Anmeldetag: 17.08.2000

(51) Int Cl.:
*C09D 133/06* (2006.01)          *C09D 183/04* (2006.01)
*C09D 185/00* (2006.01)          *B05D 7/26* (2006.01)

(86) Internationale Anmeldenummer:
PCT/EP2000/008031

(87) Internationale Veröffentlichungsnummer:
WO 2001/016241 (08.03.2001 Gazette 2001/10)

(54) **SOL-GEL-ÜBERZUG**

SOL-GEL COATING

REVETEMENT SOL-GEL

(84) Benannte Vertragsstaaten:
AT BE CH CY DE DK ES FI FR GB GR IE IT LI LU MC NL PT SE

(30) Priorität: 27.08.1999 DE 19940858

(43) Veröffentlichungstag der Anmeldung:
29.05.2002 Patentblatt 2002/22

(73) Patentinhaber: BASF Coatings Aktiengesellschaft
48165 Münster (DE)

(72) Erfinder:
• ARMBRUST, Manuela
D-48165 Münster (DE)
• BREMSER, Wolfgang
D-48165 Münster (DE)
• HINTZE-BRÜNING, Horst
D-48165 Münster (DE)
• STÜBBE, Wilfried
D-48268 Greven (DE)
• BETZ, Peter
D-48165 Münster (DE)
• EHLIG, Christel
D-48165 Münster (DE)

(56) Entgegenhaltungen:
• CHEMICAL ABSTRACTS, vol. 84, no. 18, 3. Mai 1976 (1976-05-03) Columbus, Ohio, US; abstract no. 123536w, Seite 94; XP002153878 & JP 50 095388 A (TOA GOSEI CHEM IND CO LTD) 29. Juli 1975 (1975-07-29)

**Beschreibung**

Die vorliegende Erfindung betrifft einen neuen Sol-Gel-Beschichtungsstoff zur Herstellung von Sol-Gel-Überzügen auf einschichtigen oder mehrschichtigen Lackierungen. Insbesondere betrifft die vorliegende Erfindung ein neues Verfahren zur Herstellung von lackierten Substraten, insbesondere von lackierten Automobilkarosserien, bei dem die Substrate zunächst mit einer Mehrschichtlackierung versehen werden, wonach hierauf ein Sol-Gel-Beschichtungsstoff aufgetragen und ausgehärtet wird.

Automobilkarosserien sind größtenteils mit einem mehrschichtigen Lackaufbau versehen. Als letzte Überzugsschicht werden häufig Klarlacke aufgetragen Hierfür kommen die üblichen und bekannten Einkomponenten (1K)-, Zweikomponenten (2K)-, Mehrkomponenten (3K, 4K)- Pulver-, oder Pulverslurry-Klarlacke oder UV-härtbare Klarlacke in Betracht.

Einkomponenten(1K)-, Zweikomponenten (2K)- oder Mehrkomponenten(3K, 4K)-Klarlacke werden beispielsweise in den Patentschriften US-A-5,474,811, US-A-5,356,669, US-A-5,605.96-5, WO 94/10211, WO 94/10212, WO 94/10213, EP-A-0 594 068, EP-A-0 594 071, EP-A-0 594 142, EP-A-0 604 992, WO 94/22969, EP-A-0 596 460 oder WO 92/22615 beschrieben.

Pulverklarlacke sind beispielsweise aus der deutschen Patentschrift DE-A-42 22 194 oder der Produkt-Information der Firma BASF Lacke + Farben AG. "Pulverlacke", 1990 bekannt.

Bei Pulverslury-Lacken handelt es sich um Pulverlacke in Form wäßriger Dispersionen. Derartige Slurries sind beispielsweise in der US Patentschrift US-A-4.268,542 und den deutschen Patentanmeldungen DE-A-195 18 392.4 und DE-A-196 13 547 und der nicht vorveröffentlichten deutschen Patentanmeldung DE-A-198 14 471.7 beschrieben.

UV-härtbare Klarlacke gehen beispielsweise aus den Patentschriften EP-A-0 540 884, EP-A-0 568 967 oder US-A-4,675,234 hervor.

Jeder dieser Klarlacke weist seine spezifischen Stärken und Schwächen auf. So erhält man mit Hilfe dieser Klarlacke Mehrschichtlackierungen, die den optischen Anforderungen genügen. Indes sind die kratzfesten Einkomponenten(1K)-Klarlacke manchmal nicht genügend witterungsbeständig, wogegen die witterungsbeständigen Zweikomponenten(2K)- oder Mehrkomponenten(3K 4K)-Klarlacke oftmals nicht genügend kratzfest sind. Manche Einkomponenten(1K)-Klarlacke sind zwar kratzfest und witterungsstabil, weisen aber in Kombination mit häufig angewandten Wasserbasislacken Oberflächenstörungen wie Schrumpf (wrinkling) auf.

Pulverklarlacke, Pulverslurry-Klarlacke und UV-härtbare Klarlacke dagegen weisen eine nicht völlig befriedigende Zwischenschichthaftung auf, ohne daß die Probleme der Kratzfestigkeit oder der Etchbeständigkeit völlig gelöst wären.

In neuerer Zeit wurden sogenannte Sol-Gel-Klarlacke auf Basis von siloxanhaltigen Lackformulierungen entwickelt, die durch Hydrolyse und Kondensation von Silanverbindungen erhalten werden. Diese Lacke, die als Überzugsmittel für Beschichtungen von Kunststoffen verwendet werden, werden beispielsweise in den deutschen Patentschriften DE-A-43 03 570, DE-A-34 07 087, DE-A-40 11 045, DE-A-40 25 215, DE-A-38 28 098, DE-A-40 20 316 oder DE-A-41 22 743 beschrieben.

Ebenfalls bekannt sind Beschichtungen mit silikonmodifizierten Acrylharzen, z.B. aus Japan. Kokai 75 95,388.

Sol-Gel-Klarlacke verleihen Kunststoff-Substraten wie z. B. Brillengläsern oder Motorradhelm-Visieren eine sehr gute Kratzfestigkeit. Diese Kratzfestigkeit wird von den bekannten OEM (Original Equipment Manufacturing)-Klarlacken, die üblicherweise bei der Erstlackierung von Fahrzeugen verwendet werden, nicht erreicht. Seitens der Automobilindustrie wird nun die Anforderung gestellt, diese verbesserte Kratzfestigkeit auch auf die bei der Lackierung von Automobilen verwendeten Klarlackschichten zu übertragen.

Der Ersatz der üblicherweise in der Automobillackierung eingesetzten OEM-Klarlacke oder OEM-Pulverslurry-Klarlacke durch Sol-Gel-Klarlacke ist indes nicht ohne weiteres möglich, weil sie hierfür z. B. zu spröde sind oder weil bei dem Versuch, sie an die OEM-Anforderungen anzupassen, häufig nur schlechte optische Eigenschaften (Appearance) erzielt werden. Vor allem sind die Sol-Gel-Klarlacke zu teuer. Der ökonomisch günstigere Einsatz der Sol-Gel-Klarlacke als zusätzliche Überzugsschicht über die bisher verwendeten Klarlacke bzw. Pulverslurry-Klarlacke ergibt Haftungsprobleme zwischen dem Klarlack und der Sol-Gel-Schicht, die insbesondere nach Steinschlag und bei Belastung durch Schwitzwasser auftreten.

Diese Probleme können dadurch gelöst werden, daß man die Klarlackschicht, welche mit dem Sol-Gel-Klarlack überzogen werden soll, nur teilweise aushärtet, so daß der Sol-Gel-Überzug bei dem gemeinsamen Aushärten gewissermaßen chemisch auf der Klarlackschicht verankert werden kann. Indes erfordert dieses Vorgehen, daß in ein und derselben Lackierlinie die Klarlackschichten auf Automobilkarosserien, die überschichtet werden sollen, bei einer anderen Temperatur ausgehärtet werden müssen, als die Klarlackschichten der anderen Automobilkarosserien, die nicht überschichtet werden sollen. Die Anwendung unterschiedlicher Härtungsbedingungen in einer Lackierlinie stellt einen wesentlichen Nachteil dar. Dieser Nachteil wiegt noch schwerer, weil die zweite Klarlackschicht für ihre Aushärtung eine lange Ofentrocknungszeit erfordert.

Aufgabe der vorliegenden Erfindung ist es, einen neuen Sol-Gel-Beschichtunnsstoff bereitzustellen, welcher es gestattet die vorteilhaften Eigenschaften der Sol-Gel-Überzüge mit den vorteilhaften Eigenschaften der bekannten einschichtigen oder mehrschichtigen Lackierungen, insbesondere der mehrschichtigen Lackierungen für die Automobilerstlackierung, zu kombinieren, ohne daß dabei von den üblicherweise angewandten Lackierverfahren, insbesondere dem Naß-in-naß-Verfahren bei der Automobilerstlackierung, abgewichen werden muß. Mit anderen Worten soll es der neue Sol-Gel-Beschichtungsstoff insbesondere gestatten, nachträglich in kurzer Zeit einen kratzfesten Überzug auf fertige, bereits ausgehärtete Lackierungen aufzubringen, ohne daß hierbei Haftungsprobleme auftreten.

Demgemäß wurde der neue Sol-Gel-Beschichtungsstoff gefunden, enthaltend

(A) eine Acrylatcopolymerisatlösung, enthaltend mindestens ein Acrylatcopolymerisat (A1), herstellbar durch Copolymerisation mindestens der folgenden Monomeren:

a1) mindestens ein im wesentlichen säuregruppenfreier (Meth)acrylsäureester,

a2) mindestens ein ethylenisch ungesättigtes Monomer, das mindestens eine Hydroxylgruppe pro Molekül trägt und im wesentlichen säuregruppenfrei ist, und

a3) mindestens ein mindestens eine Säuregruppe, die in die entsprechende Säureaniongruppe überführbar ist, pro Molekül tragendes ethylenisch ungesättigtes Monomer,

(B) einen Stammlack, herstellbar durch Hydrolyse und Kondensation mindestens eines hydrolysierbaren Silans (B1) der allgemeinen Formel 1

$$SiR_4 \qquad (I),$$

worin die Variable R die folgende Bedeutung hat:

R =   hydrolysierbare Gruppen, Hydroxygruppen und nicht hydrolysierbare Gruppen, mit der Maßgabe, daß mindestens eine, vorzugsweise mindestens zwei, hydrolysierbare Gruppe(n) vorhanden ist oder sind:

und

(C) ein Sol, herstellbar durch Hydrolyse, Kondensation und Komplexierung

C1) mindestens einer hydrolysierbaren Metallverbindung der allgemeinen Formel II

$$MR_n \qquad (II),$$

worin die Variablen und der Index die folgende Bedeutung haben:

M =   Aluminium. Titan oder Zirkonium.

R =   hydrolysierbare Gruppen, Hydroxygruppen und nicht hydrolysierbare Gruppen, mit der Maßgabe, daß mindestens eine, vorzugsweise mindestens zwei, hydrolysierbare Gruppe(n) vorhanden ist oder sind, und

n =   3 oder 4

C2) mindestens einer organischen Thioverbindung der allgemeinen Formel III

$$S(R^1X)_2 \qquad (III),$$

worin die Variablen die folgende Bedeutung haben:

$R^1$ =   zweibindiger Rest, welcher sich von mindestens einer der folgenden organischen Verbindungen ableitet: Substituierte und unsubstituierte, kein oder mindestens ein Heteroatom in der Kette und/oder im Ring enthaltende, lineare oder verzweigte Alkane, Alkene, Cycloalkane, Cycloalkene, Alkylcycloalkane, Alkylcycloalkene, Alkenylcycloalkane oder Alkenylcycloalkene, substituierte und unsubstituierte Aromaten oder Heteroamaten; sowie

Alkyl-, Alkenyl-, Cycloalkyl-, Cycloalkenyl-, Alkylcyloalkyl-, Alkylcycloalkenyl-, Alkenylcycloalkyl- oder Alkenylcycloalkenylsubstitiuierte Aromaten oder Heteroaromaten, deren Substituenten substituiert oder unsubstituiert sind und kein oder mindestens ein Heteroatom in ihrer Kette und/oder ihrem Ring enthalten;

X =   -OH. -SH, -NHR$^2$, worin der Rest R$^2$ für ein Wasserstoffatom oder für eine 1 bis 6 C-Atome enthaltende Alkyl- oder Cycloalkylgruppe stehen;

und

C3) mindestens eines hydrolysierbaren Silans der allgemeinen Formel 1.

Im folgenden wird der neue Sol-Gel-Beschichtungsstoff als "erfindungsgemäßen Beschichtungsstoff" bezeichnet

Außerdem wurde das neue Verfahren zur Herstellung von Sol-Gel-Ü-berzügen auf einschichtigen oder mehrschichtigen Lackierungen durch

(i) Applikation einer einschichtigen oder mehrschichtigen Lackierung auf einem gegebenenfalls grundierten Substrat,

(ii) Applikation eines Sol-Gel-Beschichtungsstoffs auf der einschichtigen oder mehrschichtigen Lackierung und

(iii) Aushärten des Sol-Gel-Beschichtungsstoffs

gefunden, das dadurch gekennzeichnet ist, daß man hierbei einen erfindungsgemäßen Beschichtungsstoff verwendet.

In folgenden wird das neue Verfahren zur Herstellung von Sol-Gel-Überzügen auf einschichtigen oder mehrschichtigen Lackierungen der Kürze halber als "erfindungsgemäßes Verfahren" bezeichnet.

Des weiteren wurden neue Sol-Gel-Überzüge gefunden, welche aus den erfindungsgemäßen Beschichtungsstoffen herstellbar sind und im folgenden als erfindungsgemäße Sol-Gel-Uberzüge" bezeichnet werden.

Nicht - zuletzt wurden neue Substrate gefunden, welche mindestens einen erfindungsgemäßen Sol-Gel-Überzug aufweisen und im folgenden als erfindungsgemäße Substrate" bezeichnet werden

Im Hinblick auf den Stand der Technik war es überraschend und für den Fachmann nicht vorhersehbar, daß die der Erfindung zugrundeliegende Aufgabe mit Hilfe des erfindungsgemäßen Beschichtungsstoffs und des erfindungsgemäßen Verfahrens gelöst werden konnte. Insbesondere war es überraschend, daß der erfindungsgemäße Beschichtungsstoff ohne Probleme auf den fertigen, ausgehärteten Lackierungen haftet, ohne daß es bei Steinschlag oder nach der Belastung im Schwitzwasser, d. h. eine zehntätige Belastung der Schichten in einer Atmosphäre von 40 °C und 100% relativer Luftfeuchtigkeit, zu Ablösungen oder Rissen kommt. Auch die optischen Eigenschaften der mit den erfindungsgemäßen Sol-Gel-Überzügen versehenen Lackierungen genügen allen Ansprüchen.

Bei dem erfindungsgemäßen Beschichtungsstoff handelt es sich um eine siloxanhaltige Lackformulierung, die durch Umsetzung von hydrolysierbaren Siliciumverbindungen mit Wasser oder Wasser abspaltenden Mitteln hergestellt werden kann und die zur Verbesserung bestimmter Eigenschaften organische Bestandteile enthält. Eine allgemeine Beschreibung von solchen Systemen findet sich beispielsweise in dem Artikel von Bruce M Novak, "Hybrid Nanocomposite Materials - Between Inorganic Glasses and Organic Polymers", in Advanced Materials, 1993, 5. Nr.6, S. 422-433, oder in dem Vortrag von R Kasemann. H. Schmidt, 15. International Conference, International Centre for Coatings Technology, Paper 7, "Coatings for mechanical and chemical protection based on organic-inorganic Sol-Gel Nanocomposites", 1993.

Die Basisreaktionen finden in einem Sol-Gel-Prozeß statt, bei dem Tetraorthosilikate gegebenenfalls in Gegenwart eines Co-Lösemittels hydrolysiert und kondensiert werden:

Hydrolyse:

$$Si(OR)_4 + H_2O \rightarrow (RO)_3Si\text{-}OH + ROH$$

Kondensation:

$$\text{-Si-OH} + \text{HO-Si-} \rightarrow \text{-Si-O-Si-} + H_2O$$

$$\text{-Si-OH} + \text{RO-Si-} \rightarrow \text{-Si-O-Si-} + ROH$$

wobei R eine Alkylgruppe, wie Methyl oder Ethyl sein kann. Häufig werden Tetramethylorthosilikat (TMOS) oder Tetraethylorthosilikat (TEOS) eingesetzt. Zur Katalyse der Reaktionen werden Säuren, Basen oder Fluoridionen eingesetzt

Bei dem erfindungsgemäßen Beschichtungsstoff handelt es sich demnach um siloxanhaltige Strukturen, die mit organischen Bestandteilen modifiziert sind (Ormocer®= Organically Modified Ceramic).

Der erfindungsgemäße Sol-Gel-Überzug wird durch gezielte Hydrolyse und Kondensation sowie Komplexierung von Kieselsäureestern und von Metallverbindungen hergestellt Spezielle Eigenschaften erhält er durch den Einbau organisch modifizierter Kieselsäurederivate in das silicatische Netzwerk. Sie erlauben den Aufbau eines organischen Polymernetzwerks zusätzlich zum anorganischen Grundgerüst, wenn organische Reste vorzugsweise mit olefinisch ungesättigten Grupppen und/ oder Epoxidgruppen eingesetzt werden

Die Modifizierung kann z. B. dadurch erfolgen, daß während der Hydrolyse und Kondensation der Ausgangsprodukte oder im Sol ein fertiges organisches Polymer anwesend ist.

Der erfindungsgemäßen Beschichtungsstoff enthält die drei wesentlichen Komponenten (A), (B) und (C) oder er besteht aus diesen.

Bei der Komponente (A) handelt es sich um eine Acrylatcopolymerisatlösung. Vorzugsweise ist diese frei von aromatischen Lösemitteln.

Im Rahmen der vorliegenden Erfindung bedeutet der Begriff "frei von aromatischen Lösemitteln" oder "aromatenfrei" hier und im folgenden, daß der Gehalt an aromatischen Lösemitteln oder aromatischen Verbindungen in einer Lösung vorzugsweise <5 Gew.-%, bevorzugt <1 Gew.-%, besonders bevorzugt <0,5 Gew.-% und ganz besonders bevorzugt <0,2 Gew.-% beträgt und insbesondere unterhalb der gaschromatographischen Nachweisgrenze liegt.

Die erfindungsgemäß zu verwendende Acrylatcopolymerisatlösung (A) enthält mindestens ein Acrylatcopolymerisat (A1), welches durch die Copolymersiation der nachstehend genannten Monomere (a1), (a2) und (a3) sowie gegebenenfalls weiterer Monomere (a4), (a5) und/oder (a6) hergestellt wird, wobei (a1), (a2) und (a3) sowie gegebenenfalls (a4), (a5) und (a6) in Art und Menge so ausgewählt werden, daß das Acrylatcopolymerisat(A1) die gewünschte OH-Zahl. Säurezahl und das gewünschte Molekulargewicht aufweist. Vorzugsweise weisen die Acrylatcopolymerisate (A1) eine Hydroxylzahl von 40 bis 240, besonders bevorzugt 60 bis 210 und insbesondere 100 bis 200, eine Säurezahl von 5 bis 100, besonders bevorzugt 10 bis 60 und insbesondere 20 bis 40, Glasübergangstemperaturen von -35 bis +85°C und zahlenmittlere Molekulargewichte Mn von 1.000 bis 300.000 auf

Zur Herstellung der erfindungsgemäß eingesetzten Polyacrylatharze kann als Monomer (a1) jeder mit (a2), (a3), (a4), (a5) und (a6) copolymerisierbare (Meth)Acrylsaurealkyl- oder -cycloalkylester mit bis zu 20 Kohlenstoffatomen im Alkylrest, insbesondere Methyl-, Ethyl-, Propyl-, n-Butyl-, sec.-Butyl-, tert.-Butyl-, Hexyl-, Ethylhexyl-, Stearyl- und Laurylacrylat oder -methacrylat; cycloaliphatische (Meth)acrylsäureester, insbesondere Cyclohexyl-, Isobornyl-, Dicyclopentadienyl-, Octahydro-4,7-methano-1H-inden-methanol- oder tert.-Butylcyclohexyl(meth)acrylat; (Meth)Acrylsäureoxaalkylester oder - oxacycloalkylester wie Ethyltriglykol(meth)acrylat und Methoxyoligoglykol(meth)acrylat mit einem Molekulargewicht Mn von vorzugsweise 550, oder andere ethoxylierte und/oder propoxylierte hydroxylgruppenfreie (Meth)acrylsäurederivate, verwendet werden. Diese können in untergeordneten Mengen höherfunktionelle (Meth)Acrylsäurealkyl- oder - cycloalkylester wie Ethylengylkol-, Propylenglykol-, Diethylenglykol-, Dipropylenglykol-, Butylenglykol-, Pentan-1,5-diol-, Hexan-1,6-diol-, Octahydro-4,7-methano-1H-inden-dimethanol- oder Cyclohexan-1,2-, -1,3- oder -1,4-diol-di(meth)acrylat, Trimethylolpropan-di- oder -tri(meth)acrylat: oder Pentaerythritdi-, -tri- oder -tetra(meth)acrylat, enthalten. Im Rahmen der vorliegenden Erfindung sind hierbei unter untergeordneten Mengen an höherfunktionellen Monomeren (a1) solche Mengen zu verstehen, welche nicht zur Vernetzung oder Gelierung der Polyacrylatharze fuhren.

Als Monomere (a2) können mit (a1), (a2), (a3), (a4), (a5) und (a6) copolymerisierbare und von (a5) verschiedene, ethylenisch ungesättigte Monomere, die mindestens eine Hydroxylgruppe pro Molekül tragen und im wesentlichen säuregruppenfrei sind, wie Hydroxyalkylester der Acrylsäure, Methacrylsäure oder einer anderen alpha, beta-ethylenisch ungesättigten Carbonsäure, welche sich von einem Alkylenglykol ableiten, der mit der Säure verestert ist, oder durch Umsetzung der Säure mit einem Alkylenoxid erhältlich sind, insbesondere Hydroxyalkylester der Acrylsäure. Methacrylsäure, Ethacrylsäure. Crotonsäure, Maleinsäure, Fumarsäure oder Itaconsäure, in denen die Hydroxyalkylgruppe bis zu 20 Kohlenstoffatome enthält, wie 2-Hydroxyethyl-, 2-Hydroxypropyl-, 3-Hydroxypropyl-, 3-Hydroxybutyl-, 4-Hydroxybutylacrylat, - methacrylat, -ethacrylat, -crotonat, -maleinat, -fumarat oder -itaconat; 1,4-Bis(hydroxymethyl)cyclohexan-, Octahydro-4,7-methano-1H-inden-dimethanol- oder Methylpropandiolmonoacrylat, -monomethacrylat, -monoethacrylat, -monocrotonat, -monomaleinat, -monofumarat oder -monoitaconat; oder Umsetzungsprodukte aus cyclischen Estern, wie z.B. epsilon-Caprolacton und diesen Hydroxyalkylestern, oder olefinisch ungesättigte Alkohole wie Allylalkohol oder Polyole wie Trimethylolpropanmono- oder diallylether oder Pentaerythritmono-, -di- oder -triallylether; verwendet werden. Hinsichtlich dieser höherfunktionellen Monomeren (a2) gilt das für die höherfunktionellen Monomeren (a1) Gesagte sinngemäß. Der Anteil an Trimethylolpropanmonoallylether beträgt üblicherweise 2 bis 10 Gew.-%, bezogen auf das Gesamtgewicht der zur Herstellung des Polyacrylatharzes eingesetzten Monomeren (a1) bis (a6). Daneben ist es aber auch möglich, 2 bis 10 Gew.-%, bezogen auf das Gesamtgewicht der zur Herstellung des Polyacrylatharzes eingesetzten Monomeren, Trimethylolpropanmonoallylether zum fertigen Polyacrylatharz zuzusetzen. Die olefinisch ungesättigten Polyole, wie insbesondere Trimethylolpropanmonoallylether, können als alleinige hydroxylgruppenhaltige Monomere (a2), insbesondere aber anteilsmäßig in Kombination mit anderen der genannten hydroxylgruppenhaltigen Monomeren, eingesetzt werden.

Als Monomer (a3) kann jedes mindestens eine Säuregruppe, vorzugsweise eine Carboxylgruppe, pro Molekül tragende, mit (a1), (a2), (a4), (a5) und (a6) copolymerisierbare, ethylenisch ungesättigte Monomer oder ein Gemisch aus solchen Monomeren verwendet werden. Als Komponente (a3) werden besonders bevorzugt Acrylsäure und/oder Methacrylsäure eingesetzt. Es können aber auch andere ethylenisch ungesättigte Carbonsäuren mit bis zu 6 C-Atomen im Molekül verwendet werden. Beispiele für solche Säuren sind Ethacrylsäure, Crotonsäure, Maleinsäure, Fumarsäure und Itaconsäure. Weiterhin können ethylenisch ungesättigte Sulfon- oder Phosphonsäuren, bzw. deren Teilester, als Komponente (a3) verwendet werden. Als Komponente (a3) kommen desweiteren Maleinsäuremono(meth)acryloyloxyethylester. Bernsteinsäuremono(meth)acryloyloxyethylester und Phthalsäuremono(meth)acryloyloxyethylester in Betracht.

Als Monomere (a4) können ein oder mehrere Vinylester von in alpha-Stellung verzweigten Monocarbonsäuren mit 5 bis 18 C-Atomen im Molekül eingesetzt werden. Die verzweigten Monocarbonsäuren können erhalten werden durch Umsetzung von Ameisensäure oder Kohlenmonoxid und Wasser mit Olefinen in Anwesenheit eines flüssigen, stark sauren Katalysators; die Olefine können Crack-Produkte von paraffinischen Kohlenwasserstoffen, wie Mineralölfraktionen, sein und können sowohl verzweigte wie geradkettige acyclische und/oder cycloaliphatische Olefine enthalten. Bei der Umsetzung solcher Olefine mit Ameisensäure bzw. mit Kohlenmonoxid und Wasser entsteht ein Gemisch aus Carbonsäuren, bei denen die Carboxylgruppen vorwiegend an einem quaternären Kohlenstoffatom sitzen. Andere olefinische Ausgangsstoffe sind z.B. Propylentrimer, Propylentetramer und Diisobutylen. Die Vinylester können aber auch auf an sich bekannte Weise aus den Säuren hergestellt werden, z.B. indem man die Säure mit Acetylen reagieren läßt. Besonders bevorzugt werden - wegen der guten Verfügbarkeit - Vinylester von gesättigten aliphatischen Monocarbonsäuren mit 9 bis 11 C-Atomen, die am alpha-C-Atom verzweigt sind, eingesetzt.

Als Monomer (a5) wird das Umsetzungsprodukt aus Acrylsäure und/oder Methacrylsäure mit dem Glycidylester einer in alpha-Stellung verzweigten Monocarbonsäure mit 5 bis 18 C-Atomen je Molekül eingesetzt. Glycidylester stark verzweigter Monocarbonsäuren sind unter dem Handelsnamen "Cardura" erhältlich. Die Umsetzung der Acryl- oder Methacrylsäure mit dem Glycidylester einer Carbonsäure mit einem tertiären alpha-Kohlenstoffatom kann vorher, während oder nach der Polymerisationsreaktion erfolgen. Bevorzugt wird als Komponente (a5) das Umsetzungsprodukt von Acryl- und/oder Methacrylsäure mit dem Glycidylester der Versaticsäure eingesetzt. Dieser Glycidylester ist unter dem Namen "Cardura E10" im Handel erhältlich.

Als Monomere (a6) können alle mit (a1), (a2), (a3), (a4) und (a5) copolymerisierbaren, von (a1), (a2), (a3) und (a4) verschiedenen, im wesentlichen säuregruppenfreien ethylenisch ungesättigten Monomere oder Gemische aus solchen Monomeren verwendet werden. Als Komponente (a6) kommen

- Olefine wie Ethylen, Propylen, But-1-en, Pent-1-en, Hea-1-en, Cyclohexen, Cyclopenten, Norbonen, Butadien, Isopren, Cylopentadien und/oder Dicyclopentadien:

- (Meth)Acrylsäureamide wie (Meth)Acrytsäureamid, N-Methyl -, N,N-Dimethyl-, N-Ethyl-, N,N-Diethyl-, N-Propyl-, N,N-Dipropyl, N-Butyl-, N,N-Dibutyl-, N-Cyclohexyl- und/oder N,N-Cyclohexyl-methyl-(meth)acrylsäureamid:

- Epoxidgruppen enthaltende Monomere wie der Glycidylester der Acrylsäure, Methacrylsäure, Ethacrylsäure, Crotonsäure, Maleinsäure, Fumarsäure und/oder Itaconsäure;

- vinylaromatische Kohlenwasserstoffe, wie Styrol, alpha-Alkylstyrole, insbesondere alpha-Methylstyrol, und/oder Vinyltoluol;

- Nitrile wie Acrylnitril und/oder Methacrylnitril,

- Vinylverbindungen wie Vinylchlorid. Vinylfluorid, Vinylidendichlorid. Vinylidendifluorid, N-vinylpyrrolidon; Vinylether wie Ethylvinylether, n-Propylvinylether, Isopropylvinylether, n-Butylvinylether, Isobutylvinylether und/oder Vinylcyclohexylether; Vinylester wie Vinylacetat, Vinylpropionat, Vinylbutyrat, Vinylpivalat und/oder der Vinylester der 2-Methyl-2-ethylheptansäure: und/oder
Polysiloxarumakromonomere, die ein zahlenmittleres Molekulargewicht Mn von 1.000 bis 40.000, bevorzugt von 2.000 bis 20.000, besonders bevorzugt 2.500 bis 10.000 und insbesondere 3.000 bis 7.000 und im Mittel 0,5 bis 2,5, bevorzugt 0,5 bis 1,5, ethylenisch ungesättigte Doppelbindungen pro Molekül aufweisen, wie sie in der DE-A-38 07 571 auf den Seilen 5 bis 7, der DE-A37 06 095 in den Spalten 3 bis 7, der EP-B-0 358 153 auf den Seiten 3 bis 6, in der US-A 4,754,014 in den Spalten 5 bis 9, in der DE-A 44 21 823 oder in der der internationalen Patentanmeldung WO 92/22615 auf Seite 12, Zeile 18, bis Seite 18, Zeile 10, beschrieben sind, oder Acryloaysilan-enthaltende Vinylmonomere, herstellbar durch Umsetzung hydroxyfunktioneller Silane mit Epichlorhydrin und anschließender Umsetzung des Reaktionsproduktes mit Methacrylsäure und/oder Hydroxyalkylestern der (Meth)acrylsäure,

in Betracht.

Vorzugsweise werden vinylaromatische Kohlenwasserstoffe, insbesondere Styrol, eingesetzt.

Die Art und Menge der Komponenten (a1) bis (a6) wird so ausgewählt, daß das Polyacrylatharz (A1) die gewünschte OH-Zahl, Säurezahl und Glasübergangstemperatur aufweist. Besonders bevorzugt eingesetzte Acrylatharze werden erhalten durch Polymerisation von

(a1) 20 bis 60 Gew -%, bevorzugt 30 bis 50 Gew.-%, der Komponente (a1),

(a2) 10 bis 50 Gew.-%, bevorzugt 15 bis 40 Gew.-%, der Komponente (a2),

(a3) 1 bis 15 Gew.-%, bevorzugt 1 bis 8 Gew.-%, der Komponente (a3),

(a4) 0 bis 25 Gew.-% der Komponente (a4),

(a5) 0 bis 25 Gew.-% der Komponente (a5) und

(a6) 5 bis 30 Gew.-%, bevorzugt 10 bis 20 Gew.-%, der Komponente (a6),

wobei die Summe der Gewichtsanteile der Komponenten (a1) bis (a6) jeweils 100 Gew.-% beträgt.

Die Herstellung der erfindungsgemäß eingesetzten Acrylatcopolymerisate (A1) erfolgt in einem organischen Lösemittel oder Lösemittelgemisch, welches vorzugsweise frei ist von aromatischen Lösungsmitteln, und in Gegenwart mindestens eines Polymerisationsinitiators. Als Polymerisationsinitiatoren werden die für die Herstellung von Acrylatcopolymerisaten üblichen Polymerisationsinitiatoren eingesetzt.

Beispiele geeigneter Polymerisationsinitiatoren sind freie Radikale bildende Initiatoren, wie z.B. tert.-Butylperoxyethylhexanoat, Benzoylperoxid, Di-tert.-Amylperoxid, Azobisisobutyronitril und tert.-Butylperbenzoat. Die Initiatoren werden bevorzugt in einer Menge von 1 bis 25 Gew.-%, besonders bevorzugt von 2 bis 10 Gew.-%, bezogen auf das Gesamtgewicht der Monomeren, eingesetzt.

Die Polymerisation wird zweckmäßigerweise bei einer Temperatur von 80 bis 200 °C, vorzugsweise 110 bis 180 °C. durchgeführt.

Bevorzugt werden als Lösemittel Ethoxvethylpropionat und Isopropoxypropanol eingesetzt.

Bevorzugt wird das Acrylatcopolymerisat (A1) nach einem Zweistufenverfahren hergestellt, da so die resultierenden erfindungsgemäßen Beschichtungsstoffe eine bessere Verarbeitbarkeit aufweisen. Bevorzugt werden daher Acrylatcopolymerisate (A1) eingesetzt, die erhältlich sind, indem

1. ein Gemisch aus den Monomeren (a1) und (a2) sowie gegebenenfalls (a4). (a5) und/oder (a6) oder ein Gemisch aus Teilen der Monomeren (a1) und (a2) sowie gegebenenfalls (a4), (a5) und/oder (a6) in einem organischen Lösemittel polymerisiert wird und

2. nachdem mindestens 60 Gew.-% des aus (a1) und (a2) sowie gegebenenfalls (a4) (a5) und/oder (a6) bestehenden Gemisches zugegeben worden sind, das Monomer (a3) und der gegebenenfalls vorhandene Rest der Monomeren (a1) und (a2) sowie gegebenenfalls (a4), (a5) und/oder (a6) zugegeben wird oder werden und weiter polymerisiert wird.

Daneben ist es aber auch möglich, die Monomeren (a4) und/oder (a5) zusammen mit zumindest einem Teil des Lösemittels vorzulegen und die restlichen Monomeren zuzudosieren. Außerdem können auch die Monomeren (a4) und/oder (a5) nur teilweise zusammen mit zumindest einem Teil des Lösemittels in die Vorlage gegeben werden und der Rest dieser Monomeren, wie oben beschrieben, zugegeben werden. Bevorzugt werden beispielsweise mindestens 20 Gew.-% des Lösemittels und ca 10 Gew.-% der Monomeren (a4) und (a5) sowie gegebenenfalls Teilen der Monomeren (a1) und (a6) vorgelegt.

Bevorzugt ist außerdem die Herstellung der erfindungsgemäß eingesetzten Acrylatpolymerisate (A1) durch ein Zweistufenverfahren, bei dem die erste Stufe 1 bis 8 Stunden, vorzugsweise 1,5 bis 4 Stunden, dauert und die Zugabe der Mischung aus (a3) und dem gegebenenfalls vorhandenen Rest der Monomeren (a1) und (a2) sowie gegebenenfalls (a4), (a5) und (a6) innerhalb von 20 bis 120 Minuten, vorzugsweise innerhalb von 30 bis 90 Minuten, erfolgt. Nach Beendigung der Zugabe der Mischung aus (a3) und dem gegebenenfalls vorhandenen Rest der Monomeren (a1) und (a2) sowie gegebenenfalls (a4), (a5) und (a6) wird so lange weiter polymerisiert, bis alle eingesetzten Monomeren im wesentlichen vollständig umgesetzt worden sind. Hierbei kann sich die zweite Stufe unmittelbar der ersten anschließen, Indes kann mit der zweiten Stufe erst nach einer gewissen Zeit, beispielsweise nach 10 min bis 10 Stunden, begonnen werden.

Die Menge und Zugabegeschwindigkeit des Initiators wird vorzugsweise so gewählt, daß ein Acrylatcopolymerisat (A1) mit einem zahlenmittleren Molekulargewicht Mn von 1000 bis 30.000 Dalton erhalten wird. Es ist bevorzugt, daß mit dem Initiatorzulauf einige Zeit, im allgemeinen ca. 1 bis 15 Minuten, vor dem Zulauf der Monomeren begonnen wird. Ferner ist ein Verfahren bevorzugt, bei dem die Initiatorzugabe zum gleichen Zeitpunkt wie die Zugabe der Monomeren begonnen und etwa eine halbe Stunde nachdem die Zugabe der Monomeren beendet worden ist, beendet wird. Der Initiator wird vorzugsweise in konstanter Menge pro Zeiteinheit zugegeben. Nach Beendigung der Initiatorzugabe wird das Reaktionsgemisch noch so lange (in der Regel 1,5 Stunden) auf Polymerisationstemperatur gehalten, bis alle eingesetzten Monomere im wesentlichen vollständig umgesetzt worden sind. "Im wesentlichen vollständig umgesetzt" soll bedeuten, daß vorzugsweise 100 Gew.-% der eingesetzten Monomere umgesetzt worden sind, daß es aber auch möglich ist, daß ein geringer Restmonomerengehalt von höchstens bis zu etwa 0,5 Gew.-%, bezogen auf das Gewicht der Reaktionsmischung, unumgesetzt zurückbleiben kann.

Bevorzugt werden die Monomeren zur Herstellung der Acrylatcopolymerisate (A1) bei einem nicht allzu hohen Polymerisationsfestkörper, bevorzugt bei einem Polymerisationsfestkörper von 80 bis 50 Gew.-%, bezogen auf die Monomeren, polymerisiert und anschließend die Lösemittel teilweise destillativ entfernt, so daß die entstehenden Acrylatcopolymerisatlösungen (A) einen Festkörpergehalt von bevorzugt 100 bis 60 Gew.-% aufweisen.

Für die Verwendung in dem erfindungsgemäßen Beschichtungsstoff wird der Festkörpergehalt der Acrylatcopolymerisatlösungen (A) mit mindestens einem aromatenfreien Lösemittel auf unter 60 Gew.-%, vorzugsweise unter 40 Gew.-% und insbesondere unter 30 Gew.-% eingestellt.

Beispiele geeigneter Lösemittel sind Ethoxyethylpropionat und Butylglykol.

Die Herstellung der erfindungsgemäß zu verwendenden Acrylatcopolymerisate (A1) weist keine methodischen Besonderheiten auf, sondern erfolgt mit Hilfe der auf dem Kunststoffgebiet üblichen und bekannten Methoden der kontinuierlichen oder diskontinuierlichen Copolymerisation unter Normaldruck oder Überdruck in Rührkesseln, Autoklaven, Rohrreaktoren oder Taylorreaktoren.

Beispiele geeigneter Copolymerisationsverfahren werden in den Patentschriften DE-A-197 09 465, DE-C-197 09 476, DE-A-28 48 906, DE-A-195 24 182. EP-A-0 554 783, WO 95/27742 oder WO 82/02387 beschrieben.

Beispiele geeigneter Reaktoren sind Rührkessel, Rührkesselkaskaden, Schlaufenreaktoren oder Taylorreaktoren.

Taylorreaktoren, die der Umwandlung von Stoffen unter den Bedingungen der Taylorströmung dienen, sind bekannt. Sie bestehen in wesentlichen aus zwei koaxialen konzentrisch angeordneten Zylindern, von denen der äußere feststehend ist und der innere rotiert. Als Reaktionsraum dient das Volumen, das durch den Spalt der Zylinder gebildet wird. Mit zunehmender Winkelgeschwindigkeit $\omega_i$ des Innenzylinders treten einer Reihe unterschiedlicher Strömungsformen auf, die durch eine dimensionslose Kennzahl, die sogenannte Taylor-Zahl Ta, charakterisiert sind. Die Taylor-Zahl ist zusätzlich zur Winkelgeschwindigkeit des Rührers auch noch abhängig von der kinematischen Viskosität $\nu$ des Fluids im Spalt und von den geometrischen Parametern, dem äußeren Radius des Innenzylinders $r_i$, dem inneren Radius des Außenzylinders $r_a$ und der Spaltbreite d, der Differenz beider Radien, gemäß der folgenden Formel:

$$\mathrm{Ta} = \omega_i \, r_i \, d \; \nu^{-1} (d / r_i)^{1/2} \qquad (I)$$

mit $d = r_a - r_i$.

Bei niedriger Winkelgeschwindigkeit bildet sich die laminare Couette-Strömung, eine einfache Scherströmung, aus. Wird die Rotationsgeschwindigkeit des Innenzylinders weiter erhöht, treten oberhalb eines kritischen Werts abwechselnd entgegengesetzt rotierende (kontrarotierende) Wirbel mit Achsen längs der Umfangsrichtung auf. Diese sogenannten Taylor-Wirbel sind rotationssymmetrisch und haben einen Durchmesser, der annähernd so groß ist wie die Spaltbreite. Zwei benachbarte Wirbel bilden ein Wirbelpaar oder eine Wirbelzelle.

Dieses Verhalten beruht darauf, daß bei der Rotation des Innenzylinders mit ruhendem Außenzylinder die Fluidpartikel nahe des Innenzylinders einer stärkeren Zentrifugalkraft ausgesetzt sind als diejenigen, die weiter vom inneren Zylinder entfernt sind. Dieser Unterschied der wirkenden Zentrifugalkräfte drängt die Fluidpartikel vom Innen- zum Außenzylinder. Der Zentrifugalkraft wirkt die Viskositätskraft entgegen, da bei der Bewegung der Fluidpartikel die Reibung überwunden werden muß. Nimmt die Rotationsgeschwindigkeit zu, dann nimmt auch die Zentrifugalkraft zu. Die Taylor-Wirbel entstehen, wenn die Zentrifugalkraft größer als die stabilisierende Viskositätskraft wird.

Bei der Taylor-Strömung mit einem geringen axialen Strom wandert jedes Wirbelpaar durch den Spalt, wobei nur ein geringer Stoffaustausch zwischen benachbarten Wirbelpaaren auftritt. Die Vermischung innerhalb solcher Wirbelpaare ist sehr hoch, wogegen die axiale Vermischung über die Paargrenzen hinaus nur sehr gering ist. Ein Wirbelpaar kann daher als gut durchmischter Rührkessel betrachtet werden. Das Strömungssystem verhält sich somit wie ein ideales Strömungsrohr, indem die Wirbelpaare mit konstanter Verweilzeit wie ideale Rührkessel durch den Spalt wandern.

Von Vorteil sind hierbei Taylorreaktoren mit einer äußeren Reaktorwand und einem hierin befindlichen konzentrisch oder exzentrisch angeordneten Rotor, einem Reaktorboden und einem Reaktordeckel, welche zusammen das ringspaltförmige Reaktorvolumen definieren, mindestens einer Vorrichtung zur Zudosierung von Edukten sowie einer Vorrichtung für den Produktablauf, wobei die Reaktorwand und/oder der Rotor geometrisch derart gestaltet ist oder sind, daß auf im wesentlichen der gesamten Reaktorlänge im Reaktorvolumen die Bedingungen für die Taylorströmung erfüllt sind, d.h., daß sich der Ringspalt in Durchflußrichtung verbreitert.

Der Anteil des Bestandteils (A) an dem erfindungsgemäßen Beschichtungsstoff kann sehr breit variieren und richtet sich vor allem danach, was für eine Flexibilität der hieraus hergestellte erfindungsgemäße Sol-Gel-Überzug aufweisen soll. Der Anteil ist nach oben begrenzt, so darf er nicht so hoch gewählt werden, daß es in dem erfindungsgemäßen Beschichtungsstoff zu einer Phasentrennung kommt oder die Härte und die Kratzfesigkeit des Sol-Gel-Überzugs zu stark abnimmt. Der Fachmann kann daher den jeweils optimalen Anteil aufgrund seines Fachwissens gegebenenfalls unter Zuhilfenahme einfacher Vorversuche bestimmen.

Der weitere wesentliche Bestandteile des erfindungsgemäßen Beschichtungsstoffs ist der Stammlack (B). Auch er ist vorzugsweise frei von aromatischen Lösemitteln.

Er wird hergestellt durch kontrollierte Hydrolyse und Kondensation mindestens eines organisch modifizierten hydrolysierbaren Silans (B1) Erfindungsgemäß ist es von Vorteil mindestens zwei Silane (B1) zu verwenden.

Bei dem hydrolysierbaren Silan (B1) handelt es sich um Verbindungen der allgemeinen Formel I

$$SiR_4 \qquad (I),$$

worin die Reste R gleich oder verschieden sein können und aus hydrolysierbaren Gruppen, Hydroxygruppen und nicht hydrolysierbaren Gruppen ausgewählt sind.

Die nicht hydrolysierbaren Gruppen R in der allgemeinen Formel I werden vorzugsweise ausgewählt aus Alkylgruppen, insbesondere mit 1 bis 4 C-Atomen, wie z.B. Methyl-, Ethyl-, Propyl- und Butylgruppen, Alkenylgruppen, insbesondere mit 2 bis 4 C-Atomen, wie z.B. Vinyl-, 1-Propenyl-, 2-Propenyl- und Butenylgruppen; Alkinylgruppen, insbesondere mit 2 bis 4 C-Atomen wie Acetylenyl- und Propargylgruppen, und Arylgruppen, insbesondere mit 6 bis 10 C-Atomen, wie z.B. Phenyl- und Naphthylgrupppen. Als nicht hydrolysierbare Gruppen R werden bevorzugt Alkylgruppen eingesetzt.

Beispiele für hydrolysierbare Gruppen R in der vorstehend genannten Formel I sind Wasserstoffatome; Alkoxygruppen, insbesondere mit 1 bis 20 C-Atomen, wie z.B. Methoxy-, Ethoxy-, n-Propoxy-, i-Propoxy, n-Butoxy-, tert.-Butoxy- und sec.-Butoxygruppen; alkoxysubstituierte Alkoxygruppen, wie z.B. beta-Methoxyethoxygruppen, Acyloxygruppen, insbesondere mit 1 bis 4 C-Atomen wie z.B. Acetoxy- und Propionyloxygruppen; und Alkylcarbonylgruppen wie z.B Acetylgruppen

Besonders bevorzugte hydrolysierbare Gruppen R sind solche, die keinen Substituenten tragen und zu aromatenfreien Hydrolyseprodukten mit niedrigem Molekulargewicht, wie z.B. niederen Alkoholen, wie Methanol, Ethanol, Propanol, n-Butanol, i-Butanol, sec.-Butanol und tert.-Butanol führen.

Wenigstens eine Gruppe R der Formel I muß eine hydrolysierbare Gruppe sein. Silane (B1) mit zwei, vorzugsweise vier und insbesondere drei hydrolysierbaren Gruppen R sind besonders bevorzugt

Die nicht hydrolysierbaren Gruppen R der Silane (B1) können mindestens eine funktionelle Gruppe enthalten. Bei diesen funktionellen Gruppen kann es sich beispielsweise um Epoxidgruppen, Aminogruppen, olefinisch ungesättigte Gruppen wie Vinyl- oder (Meth)acrylgruppen, Mercaptogruppen, Isocyanatgrupppen und/oder deren Umsetzungsprodukte mit weiteren reaktiven Verbindungen handeln.

Beispiele für gut geeignete erfindungsgemäß zu verwendende hydrolysierbare Silane (B1) sind Methyltriethoxysilan, Methyltrimethoxysilan, Tetramethylorthosilikat, Tetraethylorthosilikat, Dimethyl-, Diethyl-, Dipropyl-, Methylethyl-, Methylpropyl- und Ethylpropyldimethoxysilan, Dimethyl-, Diethyl-, Dipropyl-, Methylethyl-, Methylpropyl- und Ethylpropyldiethoxysilan, Dimethyl-, Diethyl-, Dipropyl-, Methylethyl-, Methylpropyl- und Ethylpropyldipropoxysilan, Dimethyl-, Diethyl-, Dipropyl-, Methylethyl-, Methylpropyl- und Ethylpropylmethoxyethoxysilan, Dimethyl-, Diethyl-, Dipropyl-, Methylethyl-, Methylpropyl und Ethylpropylmethoxypropoxysilan sowie Dimethyl-, Diethyl-, Dipropyl-, Methylethyl-, Methylpropyl und Ethylpropylethoxypropoxysilan, 3-Glycidyloxypropyltrimethoxysilan (GLYMO), Glycidyloxypropyltriethoxysilan (GLYEO) oder 3-Aminopropyltriethoxysilan.

Die Silane (B1) können ganz oder teilweise in Form von Vorkondensaten eingesetzt werden, d.h. Verbindungen, die durch teilweise Hydrolyse der Silane (B1), entweder allein oder im Gemisch mit anderen hydrolysierbaren Verbindungen entstanden sind.

Die Hydrolyse und Kondensation kann gegebenenfalls in Anwesenheit von organischen Monomere, von Lösemitteln, vorzugsweise aromatenfreier Lösemittel, der nachstehend beschriebenen organisch modifizierten hydrolysierbaren Metallalkoxide (C1) sowie von Metalloxiden in Form von Nanopartikeln durchgeführt werden.

Zur Hydrolyse und Kondensation werden die Silane (B1) im gewünschten Mischungsverhältnis mit Wasser vorkondensiert. Die Wassermenge wird so zudosiert, daß lokale Überkonzentrationen vermieden werden. Dies gelingt z.B. durch Eintragen der Wassermenge in das Reaktionsgemisch mit Hilfe von feuchtigkeitsbeladenen Adsorbentien, z.B Kieselgel oder Molekularsieben, wasserhaltigen organischen Lösungsmitteln, z.B. 80%igem Ethanol, oder Salzhydraten, z.B. $CaCl_2$ x $6H_2O$. Vorzugsweise erfolgt die Vorkondensation in Gegenwart eines Hydrolyse- und Kondensationskatalysators jedoch in Abwesenheit eines organischen Lösungsmittels.

In einer weiteren Variante wird die Hydrolyse und Kondensation der hydrolysierbaren Silane (B1) in der Gegenwart eines aromatenfreien organischen Lösemittels, wie ein aliphatischer Alkohol, wie Methanol, Ethanol, Propanol, Isopropanol oder Butanol, ein Ether wie Dimethoxiethan, ein Ester wie Dimethylglycolacetat oder Methoxypropylacetat und/oder 2-Ethoxyethanol oder ein Keton wie Aceton oder Methylethylketon, durchgeführt.

Gegebenenfalls können bei der Hydrolyse und Kondensation auch die nachstehend beschriebenen Metallalkoxide (C1) und/oder Metalloxide als Nanopartikel anwesend sein

Diese Nanopartikel sind < 50 nm. Es kann sich beispielsweise um $Al_2O_3$, $ZrO_2$ und/oder $TiO_2$ handeln.

Als Hydrolyse- und Kondensationskatalysatoren eignen sich protonen- oder hydroxylionenabspaltende Verbindungen und Amine. Spezielle Beispiele sind organisch oder anorganische Säuren, wie Salzsäure, Schwefelsäure. Phosphorsäure, Ameisensäure oder Essigsäure sowie organische oder anorganische Basen wie Ammoniak, Alkali- oder Erdalkalimetallhydroxide, z.B Natrium, Kalium- oder Calciumhydroxid, und im Reaktionsmedium lösliche Amine, z.B. niedere Alkylamine oder Alkanolamine. Hierbei sind flüchtige Säuren und Basen, insbesondere Salzsäure. Essigsäure, Ammoniak oder Triethylamin besonders bevorzugt.

Die Vorkondensation wird bei Temperaturen von 0 bis 100 °C und vorzugsweise 20 bis 95 °C durchgeführt. Vorteilhafterweise wird die Mischung der Ausgangsprodukte zunächst auf Temperaturen von 40 bis 80 °C, insbesondere 50 bis 70°C, erhitzt und eine gewisse Zeit, insbesondere 0,5 bis 10 Stunden, bei diesen Temperaturen gehalten, wonach sie auf Temperaturen von 80 bis 100 °C, insbesondere 85 bis 95 °C, erhitzt wird. Hiernach kann ein Teil der resultierenden Reaktionsmischung azeotrop abdestilliert werden.

Die Vorkondensation wird so weit geführt, daß der resultierende Stammlack (B) noch flüssige Konsistenz hat.

Auch der Anteil des Bestandteils (B) an dem erfindungsgemäßen Beschichtungsstoff kann sehr breit variieren und richtet sich vor allem danach, was für eine Kratzfestigkeit und Härte der hieraus hergestellte erfindungsgemäße Sol-Gel-Überzug aufweisen soll. Der Anteil ist nach oben begrenzt; so darf er nicht so hoch gewählt werden, daß es in dem erfindungsgemäßen Beschichtungsstoff zu einer Phasentrennung kommt und/oder daß die hiermit hergestellten erfindungsgemäßen Sol-Gel-Überzüge zu hart und spröde werden. Der Fachmann kann daher den jeweils optimalen Anteil aufgrund seines Fachwissens gegebenenfalls unter Zuhilfenahme einfacher Vorversuche bestimmen.

Der weitere wesentliche Bestandteil des erfindungsgemäßen Beschichtungsstoffs ist das Sol (C), welches durch Hydrolyse, Kondensation und Komplexierung der nachstehend im Detail beschriebenen Ausgangsverbindungen (C1). (C2) und (C3) hergestellt wird. Das Sol (C) ist vorzugsweise im vorstehend genannten Sinne aromatenfrei.

Bei der Ausgangsverbindung (C1) handelt es sich um mindestens eine hydrolysierbare Metallverbindung der allgemeinen Formel II

$$MR_n \qquad (II),$$

In der allgemeinen Formel II steht die Variable M für Aluminium, Titan oder Zirkonium, insbesondere aber Aluminium. Dementsprechend steht der Index n für 3 oder 4.

In der allgemeinen Formel II hat die Variable R die gleiche Bedeutung wie vorstehend bei der allgemeinen Formel I angegeben. Erfindungsgemäß ist es hierbei von Vorteil, wenn im Falle von Aluminium mindestens zwei, insbesondere drei, und im Falle von Titan oder Zirkonium drei, insbesondere vier, hydrolysierbare Gruppen vorhanden sind.

Erfindungsgemäß sind die vorstehend beschriebenen Alkoxygruppen besonders vorteilhaft und werden deshalb bevorzugt verwendet. Ganz besonders bevorzugt werden sec.-Butyloxygruppen verwendet. Ein Beispiel für eine ganz besonders bevorzugt verwendete hydrolysierbare Metallverbindung (C1) ist demnach Aluminiumtri-sec.-butylat.

Bei der Ausgangsverbindung (C2) handelt es sich um mindestens eine organische Thioverbindung der allgemeinen Formel III

$$S(R^1X)_2 \qquad (III).$$

In der allgemeinen Formel III bedeutet der Rest $R^1$ einen zweibindigen Rest, welcher sich von mindestens einer der folgenden organischen Verbindungen ableitet:

- Substituierte und unsubstiuierte, kein oder mindestens ein Heteroatom in der Kette und/oder im Ring enthaltende, lineare oder verzweigte Alkane, Alkene, Cycloalkane, Cycloalkene, Alkylcycloalkane, Alkylcycloalkene, Alkenylcycloalkane oder Alkenylcycloalkene,

- substituierte und unsubstituierte Aromaten oder Heteroamaten; sowie

- Alkyl-, Alkenyl-, Cycloalkyl-, Cycloalkenyl-, Alk-ylcyloalkyl-, Alkylcycloalkenyl-, Alkenylcycloalkyl- oder Alkenylcycloalkenylsubstitiuierten Aromaten oder Heteroaromaten, deren Substituenten substituiert oder unsubstituiert sind und kein oder mindestens ein Heteroatom in ihrer Kette und/oder ihrem Ring enthalten.

Beispiele geeigneter Heteroatome sind Sauerstoff -, Stickstoff -, Bor -, Silizium-, Schwefel- oder Phosphoratome.

Beispiele geeigneter Substitutienten für die vorstehend genannten Reste $R^1$ sind Halogenatome, insbesondere Fluor- und Chloratome, Nitrogruppen oder Nitrilgruppen

Beispiele geeigneter Aromaten sind Benzol und Naphthalin.

Beispiele geeigneter Heteroaromaten sind Thiophen, Pyridin oder Triazin.

Beispiele geeigneter Alkane sind solche mit 2 bis 20 C-Atomen im Molekül wie Ethan, Propan, Butan, Isobutan, Pentan, Neopentan, Hexan, Heptan, Octan, Isooctan, Nonan. Dodecan, Hexadecan oder Eicosan.

Beispiele geeigneter Alkene sind Ethylen und Propylen.

Beispiele geeigneter Cycloalkane sind Cyclopentan und Cyclohexan.

Beispiele geeigneter Cycloalkene sind Cyclopenten und Cyclohexen.

Beispiele geeigneter Alkylcycloalkane sind Methylcyclopentan und Methylcyclohexan.

Beispiele geeigneter Alkylcycloalkene sind Methylcyclopenten und Methylcyclohexen.

Beispiele geeigneter Alkenylcycloalkane sind Allyl- und Vinylcyclopentan und Allyl- und Vinylcyclohexan.

Beispiele geeigneter Alkenylcycloalkene sind Vinylcyclopenten und Vinylcyclohexen.

Beispiele geeigneter Alkyl-, Alkenyl-, Cycloalkyl-, Cycloalkenyl-, Alkylcyloalkyl-, Alkylcycloalkenyl-, Alkenylcycloalkyl- oder Alkenylcycloalkenylsubstituenten sind Methyl. Ethyl, Propyl. Isopropyl, n-Butyl, sec.-Butyl, tert.-Butyl, Vinyl, Allyl, Cyclohexyl, Cyclohexenyl, 4-Methylcyclohexyl, 4-Methylcyclohexenyl, 3-Allylcyclohexenyl oder 4-Vinylcyclohexenyl.

Vorzugsweise leiten sich die Reste $R^1$ von organischen Verbindungen ab, die als solche unsubstituiert sind oder deren Substituenten unsubstituiert sind.

Vorteilhafterweise enthalten diese Verbindungen auch keine Heteroatome in ihren Ketten und/oder in ihren Ringen und/oder in den Ketten und/oder den Ringen ihrer Substitutienten.

Besondere Vorteile resultieren, wenn sich die Reste $R^1$ von linearen Alkanen ableiten, welche die vorstehend genannten vorteilhaften Bedingungen erfüllen. Weitere Vorteile resultieren, wenn sie sich von Ethan, Propan, Butan, Pentan oder Hexan ableiten.

In der allgemeinen Formel III steht X für -OH, -SH oder -NHR², worin der Rest $R^2$ für ein Wasserstoffatom oder für eine 1 bis 6 C-Atome enthaltende Alkyl- oder Cycloalkylgruppe, insbesondere Methyl, Ethyl, Propyl, Butyl, Pentyl, Hexyl oder Cyclohexyl, steht. Vorteilhafterweise steht der Rest $R^2$ für ein Wasserstoffatom.

Besonders bevorzugt steht X für -OH.

Beispiele für besonders gut geeignete organische Thioverbindungen (C2) sind somit Bis-(6-hydroxhexyl)-. Bis-(5-hydroxypentyl)-. Bis-(4-hydroxybutyl)-, Bis-(3-hydroxypropyl)- und Bis-(2-hydroxyethyl)-sulfid (Thiodiethanol), von denen Thiodiethanol ganz besonders vorteilhaft ist und deshalb ganz besonders bevorzugt verwendet wird.

Bei der Ausgangsverbindung (C3) handelt es sich um mindestens ein vorstehend im Detail beschriebenes hvdrolysierbares Silan der allgemeinen Formel I.

Erfindungsgemäß ist es von Vorteil, wenn mindestens zwei Silane (C3) der allgemeinen Formel 1 verwendet werden. Ganz besondere Vorteile resultieren, wenn

- mindestens ein Silan (C3-1) mit vier hydrolysierbaren Gruppen R, vorzugsweise drei hydrolysierbaren Gruppen R und einer nicht hydrolysierbaren Gruppe R ohne funktionelle Gruppen, sowie

- mindestens ein Silan (C3-2) mit mindestens zwei oder drei, insbesondere drei, hydrolysierbaren Gruppen R und einer oder zwei, insbesondere einer, nicht hydrolysierbaren Gruppe R mit mindestens einer, insbesondere einer, funktionellen Gruppe, insbesondere einer Epoxidgruppe,

verwendet werden.

Beispiele gut geeigneter Silane (C3-1) sind Methyltriethoxysilan oder Methyltrimethoxysilan, insbesondere Methyltriethoxysilan.

Beispiele gut geeigneter Silane (C3-2) sind 3-Glycidyloxypropyltrimethoxysilan (GLYMO) oder Glycidyloxypropyltriethoxysilan (GLYEO), insbesondere GLYMO

Die Gewichtsverhältnisse und die Molverhältnisse der Ausgangsprodukte (C1) : (C2) : (C3) bzw. [(C3-1) + (C3-2)] können sehr breit variieren, was einen besonderen Vorteil des erfindungsgemäß zu verwendenden Sols (C) darstellt. Ebenso können die Gewichtsverhältnisse und die Molverhältnisse (C3-2) : (C3-1) sehr breit variiert werden, was ein zusätzlicher besonderer Vorteil ist.

Erfindungsgemäß ist es von ganz besonderem Vorteil, wenn das Molverhältnisse (C3-2) : (C3-1) bei 1 : 20 bis 1 : 1 und insbesondere 1 : 6 bis 1 : 2 liegt.

Erfindungsgemäß ist es des weiteren von ganz besonderem Vorteil, wenn das Molverhältnis von organischer Thioverbindung (C2) zu Silan (C3-2) bei 1 : 1 bis 1 10 und insbesondere 1 : 1.2 bis 1 : 3 liegt

Das atomare Verhältnis von Metall M zu Silizium im Sol (C) kann sehr breit variieren und richtet sich vor allem danach, welche Kratzfestigkeit in den erfindungsgemäßen Sol-Gel-LJberzüaen eingestellt werden soll. Im allgemeinen wird durch den Ersatz eines Teils des Siliziums durch insbesondere Aluminium die Kratzfestigkeit und die Härte der erfindunasaemäßen Sol-Gel-Überzüge erhöht. Insbesondere liegt das Atomverhältnis M : Si bei 1 : 10 bis 1 : 1,5, vorzugsweise 1 6 bis 1 : 3.

Erfindungsgemäß werden Hydrolyse und Kondensation der vorstehend beschriebenen Silane (C3) sowie der Metallverbindungen (C1) in der Gegenwart mindestens einer organischen, vorzugsweise nichtaromatischen Verbindung durchgerührt, welche Chelatliganden zu bilden vermag. Hierbei handelt es sich um organische Verbindungen mit mindestens zwei funktionellen Gruppen, weiche an Metallatome oder -ionen koordinieren können. Üblicherweise handelt es sich bei diesen funktionellen Gruppen um Elekrtronendonatoren, welche Elektronen an Metallatome oder -ionen als Elektronenakzeptoren abgeben. Erfindungsgemäß sind grundsätzlich alle organischen Verbindungen der genannten Art geeignet, solange sie nicht die Hydrolyse und Kondensation und/oder die Vernetzung zum fertigen Sol-Gel-Überzug nachteilig beeinflussen oder gar völlig verhindern. Beispiele geeigneter organischer Verbindungen sind Dimethylglyoxim oder Verbindungen, die Carbonylgruppen in 1,3-Stellung enthalten, wie Acetylaceton oder Acetessigsäureethylester. Ergänzend wird auf Römpp Chemie Lexikon, Georg Thieme Verlag. Stuttgart, 1989, Band 1, Seite 634, verwiesen.

Die Hydrolyse, Kondensation und Komplexierung kann im wesentlichen unter den Bedingungen, welche vorstehend für die Herstellung des Stammlacks (B) angegeben werden, erfolgen. Erfindungsgemäß ist es indes von Vorteil, wenn etwas niedrigere Temperaturen angewandt werden.

Weitere Vorteile resultieren, wenn als Kondensationskatalysatoren anorganische Säuren, insbesondere Salzsäure, und/oder organische Säuren, vorzugsweise Carbonsäuren, insbesondere Essigsäure, angewandt werden. Besonders vorteilhaft ist die gemeinsame Verwendung anorganischer Säuren und organischer Säuren, insbesondere Salzsäure und Essigsäure.

Ganz besondere Vorteile ergeben sich, wenn das Molverhältnis von Thioverbindung (C2) zu organischer Säure, insbesondere Essigsäure, bei 0,8 : 1 bis 1.2 1 liegt.

Vorzugsweise werden bei der Herstellung des Sols (C) die Silane (C3) sowie die Metallverbindungen (C1) und die organischen Verbindungen, welche Chelate zu bilden vermögen, vorgelegt, wonach dem Gemisch, vorzugsweise bei tieferen Temperaturen, insbesondere 0°C, Wasser und mindestens einer der vorstehend beschriebenen Kondensationskatalysatoren sowie mindestens eine organische Thioverbindung (C2) zugegeben werden.

Besonders bevorzugt werden ein Teil der Silane (C3), insbesondere das Silan (C3-1), sowie die Metallverbindungen (C1) vorgelegt, wonach dem Gemisch, vorzugsweise bei tieferen Temperaturen, insbesondere 0 bis 40°C, sukzessive die organischen Verbindungen, welche Chelate zu bilden vermögen, der Rest der Silane (C3), insbesondere das Silan (C3-2), Wasser und mindestens einer der vorstehend beschriebenen Kondensationskatalysatoren sowie mindestens eine organische Thioverbindung (C2) zudosiert werden.

Die Reaktion kann in Gegenwart der vorstehend beschriebenen Lösemittel und/oder Nanopartikel durchgeführt werden. Erfindungsgemäß ist es indes von Vorteil sie in Abwesenheit dieser Komponenten durchzuführen. Da das resultierende Sol (C) sehr reaktiv ist, empfiehlt es sich, es bis zu seiner weiteren Verwendung bei Temperaturen unterhalb 0 °C aufzubewahren.

Auch der Anteil des Bestandteils (C) an dem erfindungsgemäßen Beschichtungsstoff kann sehr breit variieren und richtet sich vor allem danach, wie das Eigenschaftsprofil hinsichtlich der Kratzfestigkeit und Härte einerseits und der Flexibilität andererseits der hieraus hergestellten erfindungsgemäßen Sol-Gel-Überzuge ausbalanciert werden soll. Der Anteil ist auch hier nach oben begrenzt; so darf er nicht so hoch gewählt werden, daß es in dem erfindungsgemäßen Beschichtungsstoff zu einer Phasentrennung kommt und/oder daß die hiermit hergestellten erfindungsgemäßen Sol-Gel-Überzüge zu hart und spröde werden. Der Fachmann kann daher den jeweils optimalen Anteil aufgrund seines Fachwissens gegebenenfalls unter Zuhilfenahme einfacher Vorversuche bestimmen

Besonders vorteilhafte erfindungsgemäße Beschichtungsstoffe enthalten, jeweils bezogen auf ihre Gesamtmenge, 5 bis 50, vorzugsweise 10 bis 40 und insbesondere 15 bis 30 Gew.-% der Acrylatcopolymerisatlösung (A), 5 bis 40, vorzugsweise 10 bis 35 und insbesondere 15 bis 30 Gew.-% des Stammlacks (B) sowie 1 bis 20, vorzugsweise 2 bis 15 und insbesondere 3 bis 10 Gew.-% des Sols (C).

Hierbei ist es erfindungsgemäß von ganz besonderem Vorteil, wenn die Festkörpergehalte der erfindungswesentlichen Bestandteile (A), (B) und (C) derart gewählt werden, daß sie in einem Gewichtsverhältnis von (A) : (B) : (C) von

- (0.5 bis 5) : (bis 10) : 1

- vorzugsweise (1 bis 4) : (2 bis 8) : 1 und

- insbesondere (1.5 bis 3) : (3 bis 6) : 1

zueinander stehen.

Des weiteren kann der erfindungsgemäße Beschichtungsstoff eine Additivlösung (D) enthalten. Sie ist vorzugsweise aromatenfrei.

Die Additivlösung (D) enthält mindestens eine ethylenisch ungesättigte Verbindung (d1), welche mindestens eine Epoxidgruppe aufweist. Ein Beispiel einer geeigneten Verbindung (d1) ist Glycidyl(meth)acrylat.

Des weiteren enthält sie als Komponente (d2) mindestens ein Silan (B1) mit mindestens einer nicht hydrolysierbaren Gruppe R, welche mindestens eine Epoxidgruppe aufweist. Ein Beispiel einer geeigneten Verbindung (d2) ist 3-Glycidyloxypropyltrimethoxysilan.

Nicht zuletzt enthält sie mindestens ein Addukt (d3) mindestens eines Silans (B1) mit mindestens einer nicht hydrolysierbaren Gruppe R welche mindestens eine Aminogruppe aufweist, und mindestens einem cyclischen ethylenisch ungesättigten Dicarbonsäureanhydrid. Ein Beispiel für ein geeignetes Silan (B1) ist 3-Aminopropyltriethoxysilan. Beispiele für geeignete Dicarbonsäureanhydride sind Maleinsäureanhydrid und Itaconsäureanhydrid.

In der Additivlösung sind die Komponenten (d1), (d2) und (d3) in einem Gewichtsverhältnis von (1 bis 10) : (1 bis 30) : 1, insbesondere (2 bis 6) : (10 bis 20) : 1 enthalten Vorzugsweise liegt der Festkörpergehalt der Additivlösung (D) unter 80 Gew.-%, vorzugsweise unter 60 Gew.-% und insbesondere unter 50 Gew.-%.

Sofern sie mit verwendet wird, kann der Anteil der Additivlösung (D) an dem erfindungsgemäßen Beschichtungsstoff breit variieren. Der Fachmann kann den jeweils optimalen Anteil aufgrund seines Fachwissens gegebenenfalls unter Zuhilfenahme einfacher Vorversuche bestimmen.

Der erfindungsgemäße Beschichtungsstoff kann des weiteren größere Mengen an Lösemitteln, vorzugsweise aromatenfreien Lösemitteln, als Bestandteil (E) enthalten. Dies ist insbesondere dann der Fall, wenn besonders dünne erfindungsgemäße Sol-Gel-Überzüge, vorzugsweise mit einer TrockenfilmSchichtdicke <5 $\mu$m hergestellt werden sollen. Beispiele geeigneter Lösemittel (E) sind die vorstehend genannten niederen Alkohole, insbesondere Ethanol, oder Glykolether wie Ethylglykol oder Butylglykol.

Außerdem kann der erfindungsgemäße Beschichtungsstoff übliche und bekannte Lackadditive (F) enthalten. Geeignet sind alle Lackadditive (F), welche das Eigenschaftsprofil der erfindungsgemäßen Sol-Gel-Überzüge, insbesondere deren optische Eigenschaften (Appearance) und Kratzfestigkeit, nicht nachteilig beeinflussen, sondern in vorteilhafter Weise variieren und verbessern.

Beispiele geeigneter Lackdditive (F) sind

- UV-Absorber;

- Radikalfänger;

- Katalysatoren für die Vernetzung:

- Slipadditive;

- Polymerisationsinhibitoren;

- Entschäumer;

- Antikochermittel, bei denen der gezielte Einsatz kleinerer Mengen aromatischer Lösemittel von Nutzen sein kann:

- Emulgatoren, insbesondere nicht ionische Emulgatoren wie alkoxylierte Alkanole, Polyole, Phenole und Alkylphenole oder anionische Emulgatoren wie Alkalisalze oder Ammoniumsalze von Alkancarbonsäuren, Alkansulfonsäuren, und Sulfonsäuren von alkoxylierten Alkanolen, Polyolen, Phenolen und Alkylphenolen;

- Netzmittel wie Siloxane, fluorhaltige Verbindungen, Carbonsäurehalbester, Phosphorsäureester, Polyacrylsäuren und deren Copolymere oder Polurethane;

- Haftvermittler;

- Verlaufmittel;

- filmbildende Hilfsmittel wie Cellulose-Derivate;

- Flammschutzmittel oder

- rheologiesteuernde Additive wie die aus den Patentschriften WO 94/22968. EP-A-0 276 501, EP-A-0 249 201 oder WO 97/12945 bekannten; vernetzte polymere Mikroteilchen, wie sie beispielsweise in der EP-A-0 008 127 offenbart sind; anorganische Schichtsilikate wie Aluminium-Magnesium-Silikate, Natrium-Magnesium- und Natrium-Magnesium-Fluor-Lithium-Schichtsilikate des Montmorillonit-Typs; Kieselsäuren wie Aerosile; oder synthetische Polymere mit ionischen und/oder assoziativ wirkenden Gruppen wie Polyvinylalkohol, Poly(meth)acrylamid, Poly(meth)acrylsäure, Polyvinylpyrrolidon, Styrol-Maleinsäureanhydrid- oder Ethylen-Maleinsäureanhydrid-Copolymere und ihre Derivate oder hydrophob modifizierte ethoxylierte Urethane oder Polyacrylate.

Weitere Beispiele geeigneter Additive (F) werden in dem Lehrbuch "Lackadditive" von Johan Bieleman, Wiley-VCH, Weinheim, New York, 1998, beschrieben.

Der erfindungsgemäße Beschichtungsstoff weist einen Festkörpergehalt von bis zu 80. vorzugsweise bis zu 60, besonders bevorzugt bis zu 40 und insbesondere bis zu 20 Gew.-% auf. Sollen besonders dünne erfindungsgemäße Sol-Gel-Überzüge, d.h. Überzüge einer Stärke < 5 $\mu$m hergestellt werden, empfiehlt es sich, einen Festkörpergehalt von weniger als 20 Gew.-% zu wählen.

Die Herstellung des erfindungsgemäßen Beschichtungsstoffs weist keine Besonderheiten auf, sondern erfolgt in üblicher und bekannter Weise durch Vermischen seiner wesentlichen Bestandteile (A), (B) und (C) sowie gegebenenfalls (D), (E) und/oder (F) in üblichen und bekannten Mischaggregaten wie Dissolvern. Die Bestandteile können hierbei in beliebiger Weise miteinander vermischt werden. Beispielsweise können sie auf einmal in das Mischaggregat eingefüllt und miteinander vermischt werden. Erfindungsgemäß ist es indes von Vorteil, das Sol (C) vorzulegen, um dann die übrigen Bestandteile nacheinander einzelnen zuzugeben. Hierbei hat es sich bewährt, den Stammlack (B) vor der Acrylatcopolymerisatlösung (A) zuzusetzen. Wird ein Lösemittel (E) verwendet, wird es vorteilhafterweise nach der Zugabe des Stammlacks (B) und vor der Zugabe des Bestandteils (A) und ggf. (D) zugesetzt. Werden Lackadditive (F) verwendet, werden sie vorteilhafterweise nach der Zugabe des Stammlacks (B) und vor der Zugabe des Bestandteils (A) hinzugegeben. Werden Lösemittel (E) und Lackadditive (F) verwendet, werden die Lackadditive (F) vor der Zugabe der Lösemittel (E) zugesetzt.

Die erfindungsgemäßen Beschichtungsstoffe sind hervorragend für die Herstellung der erfindungsgemäßen Sol-Gel-Überzüge, insbesondere Sol-Gel-Klarlacke, geeignet.

Erfindungsgemäß kann mit ihnen jedes denkbare Substrat beschichtet werden. Beispielhaft seien Substrate aus Metall, Kunststoff. Glas, Holz oder Keramik genannt Diese Substrate können mit einer Grundierung versehen sein. Im Falle von Kunststoff kann es sich um eine sogenannte Hydro-Grundierung handeln. Im Falle von Metall kann das Substrat auch einer Oberflächenbehandlung, beispielsweise einer Galvanisierung oder einer Phosphatierung oder Eloxierung, unterzogen worden sein. Des weiteren kann auf dem Metallsubstrat ein Elektrotauchlack und ein Füller als Grundierung vorhanden sein.

Die Applikation der erfindungsgemäßen Beschichtungsstoffe weist keine methodischen Besonderheiten auf, sondern es können die üblichen Applikationsmethoden wie Spritzen. Rakeln, Streichen, Gießen, Tauchen, Tränken, Träufeln oder Walzen angewandt werden. Dabei können die Substrate ebenso wie die Applikationseinrichtungen bewegt werden oder ruhen.

Nach ihrer Applikation werden die erfindungsgemäßen Beschichtungsstoffe gehärtet, wodurch die erfindungsgemäßen Sol-Gel-Überzüge resultieren. Vor der Härtung kann gegebenenfalls noch eine Vortrocknung erfolgen. Auch hierfür können die üblichen und bekannten Verfahren und Vorrichtungen wie Umluftöfen angewandt werden. Erfindungsgemäß ist es indes von Vorteil, die erfindungsgemäßen Beschichtungsstoffe mit mittlerer IR-Strahlung zu härten. Hierdurch wird es möglich, nur Teile von Substraten oder ein- oder mehrschichtigen Lackierungen an beschädigten oder an besonders exponierten Stellen gezielt zu beschichten und kratzfest auszurüsten, ohne daß dabei die übrigen Teile durch thermische Belastung in Mitleidenschaft gezogen werden. Dies macht die Verwendung der erfindungsgemäßen Beschichtungsstoffe in der Autoreparaturlackierung möglich. Da hierbei außerdem die Menge des erfindungsgemäßen Beschichtungsstoffs auf ein Minimum beschränkt werden kann, ist seine Verwendung auch besonders wirtschaftlich.

Die erfindungsgemäßen Beschichtungsstoffe können direkt auf die Substrate appliziert werden, um hierauf nach dem Aushärten einen kratzfesten erfindungsgemäßen Sol-Gel-Überzug zu bilden In dieser Weise können Substrate, wie sie üblicherweise für die Herstellung von Fahrzeugen verwendet werden, von sonstigen Bauteilen und Gerätschaften, wie Radiatoren, Coils oder Container, oder von Möbeln kratzfest ausgerüstet werden.

Die besonderen Vorteile der erfindungsgemäßen Beschichtungsstoffe treten indes besonders offen zutage, wenn sie für die Beschichtung von einschichtigen oder mehrschichtigen Lackierungen mit den erfindungsgemäßen Sol-Gel-Überzüge verwendet werden. Hierbei erweist es sich als besonders vorteilhaft, daß die einschichtigen oder mehrschichtigen Lackierungen vollständig ausgehärtet sein können.

Demgemäß eignen sich die erfindungsgemäßen Beschichtungsstoffe für die Beschichtung einschichtiger oder mehrschichtiger Lackierungen, wie sie auf den Gebieten der Automobiiersttackierung, der Autoreparaturlackierung, der industriellen Lackierung, inklusive Coil Coating und Container Coating, der Kunststofflackierung und der Möbellackierung üblich und bekannt sind

Beispiele einschichtiger Lackierungen dieser Art sind die von der Automobiierstiackierung her bekannten Uni-Decklacke, welche Bindemittel, Vernetzungsmittel und effekt- und/oder farbgebende Pigmente enthalten.

Beispiele für mehrschichtige Lackierungen sind die Lackierungen, welche einen effekt-und/oder farbgebenden Basislack, insbesondere einen Wasserbasislack, und einen Klarlack enthalten und im Rahmen der Automobilerstlak-kierung nach dem Naß-in-naß-Verfahren, wie es beispielsweise in den Patentschriften US-A-3,639,147, DE-A-33 33 072, DE-A-38 14 853, GB-A-2 012 191, US-A-3,953,644, EP-A-0 260 447, DE-A-3903804, EP-A-0 320 552, DE-A-36 28 124, US-A-4,719,132, EP-A-0 297 576, EP-A-0 069 936, EP-A-0 089497, EP-A-0 195 931, EP-A-0 228 003, EP-A-0 038 127 und DE-A-28 18 100 beschrieben wird, oder im Rahmen der Autoreparaturlackierung erzeugt werden. Die erfindungsgemäßen Beschichtungsstoffe sind insbesondere für Beschichtung von mehrschichtigen Lackierungen dieser Art besonders hervorragend geeignet.

Beispiele geeigneter Wasserbasislacke sowie der entsprechenden mehrschichtigen Lackierungen sind aus den Patentschriften EP-A-0 089 497, EP-A-0 256 540, EP-A-0 260 447, EP-A-0 297 576, WO 96/12747, EP-A-0 523 610, EP-A-0 228 003, EP-A-0 397 806, EP-A-0 574 417, EP-A-0 531 510, EP-A-0 581 211, EP-A-0 708 788, EP-A-0 593 454, DE-A-43 28 092, EP-A-0 299 148, EP-A-0 394 737, EP-A-0 590 484, EP-A-0 234 362, EP-A-0 234 361, EP-A-0 543 817, WO 95/14721, EP-A-0 521 928, EP-A-0 522 420, EP-A-0 522 419, EP-A-0 649 865, EP-A-0 536 712. EP-A-0 596 460. EP-A-0 596 461. EP-A-0 584 818, EP-A- 0 669 356, EP-A-0 6;4 431, EP-.A-0 678 536. EP-A-0 354 261, EP-A-0 424 705. WO 97/49745, WO 97/49747 oder EP-A-0 401 565 bekannt.

Beispiele geeigneter Einkomponenten(1K)-, Zweikomponenten(2K)- oder Mehrkomponenten(3K, 4K)-Klarlak-ke sind beispielsweise aus den Patentschriften DE-A-42 04 518, US-A-5,474,811, US-A-5,356,669, US-A-5,605,965, WO 94/10211, WO 94/10212, WO 94/10213, EP-A-0 594 068, EP-A-0 594 071, EP-A-0 594 142, EP-A-0 604 992. WO 94/22969, EP-A-0 596 460 oder WO 92/22615 bekannt.

Einkomponenten(1K)-Klarlacke enthalten bekanntermaßen hydroxylgruppenhaltige Bindemittel und Vernetzungsmittel wie blockierte Polyisocyanate, Tris(alkoxycarbonylamino)triazine und/oder Aminoplastharze. In einer weiteren Variante enthalten sie als Bindemittel Polymere mit seitenständigen Carbamat- und/oder Allophanatgruppen und gegebenenfalls carbamat- und/oder allophanatmodifizerten Aminoplastharzen als Vernetzungsmittel.

Zweikomponenten (2K)- oder Mehrkomponenten (3K, 4K)-Klarlacke enthalten als wesentliche Bestandteile bekanntermaßen hydroxylgruppenhaltige Bindemittel und Polyisocyanate als Vernetzungsmittel, welche bis zu ihrer Verwendung getrennt gelagert werden.

Beispiele geeigneter Pulverklarlacke sind beispielsweise aus der deutschen Patentschrift DE-A-42 22 194 oder der Produkt-Information der Firma BASF Lacke + Farben AG, "Pulverlacke", 1990 bekannt.

Pulverklarlacke enthalten als wesentliche Bestandteile bekanntermaßen epoxidgruppenhaltige Bindemittel und Polycarbonsäuren als Vernetzungsmittel.

Beispiele geeigneter Pulverslurry-Klarlacke sind beispielsweise aus der US-Patentschrift US-A-4,268,542 und den deutschen Patentanmeldungen DE-A-195 18 392.4 und DE-A-196 13 547 bekannt oder werden in der nicht vorveröffentlichten deutschen Patentanmeldung DE-A-198 14 471.7 beschrieben.

Pulverslurry-Klarlacke enthalten bekanntermaßen Pulverklarlacke in einem wäßrigen Medium dispergiert

UV-härtbare Klarlacke gehen beispielsweise aus den Patentschriften EP-A-0 540 884, EP-A- 0 568 967 oder US-A-4,675,234 hervor.

Sie enthalten bekanntermaßen mit aktinischem Licht und/oder Elektronenstrahlung härtbare niedermolekulare, oligomere und/oder polymere Verbindungen, vorzugsweise strahlenhärtbare Bindemittel, insbesondere auf Basis ethylenisch ungesättigter Präpolymerer und/oder ethylenisch ungesättigter Oligomerer, gegebenenfalls einen oder mehrere Reaktivverdünner sowie gegebenenfalls einen oder mehrere Photoinitiatoren. Beispiele geeigneter strahlenhärtbarer Bindemittel sind (meth)acrylfunktionelle (Meth)Acrylcopolymere, Polyetheracrylate, Polyesteracrylate, ungesättigte Polyester, Epoxyacrylate, Urethanacrylate, Aminoacrylate, Melaminacrylate, Silikonacrylate und die entsprechenden Methacrylate. Bevorzugt werden Bindemittel eingesetzt, die frei von aromatischen Struktureinheiten sind

Es können indes auch mehrschichtige Klarlackschichten angewandt werden wie etwa eine Klarlackschicht auf der Basis von hydroxylgruppenhaltigen Bindemitteln und blockierten Polyisocyanaten und Aminoplasten als Vernetzungsmittel, die der Wasserbasislackschicht unmittelbar aufliegt und über der sich eine weitere Klarlackschicht auf der Basis von carbamat- und/oder allophanatgruppenhaltigen Bindemitteln und Aminoplasten als Vernetzungsmittel befindet.

In erfindungsgemäßer Verfahrensweise werden die ein- oder mehrschichtigen Lackierungen, insbesondere die Klarlacke, vor der Applikation des erfindungsgemäßen Beschichtungsstoffs ausgehärtet. Dies stellt einen weiteren besonderen Vorteil des erfindungsgemäßen Beschichtungsstoffs und des Verfahrens dar, weil die üblicherweise im Betrieb angewandten Lackierverfahren- und -vorrichtungen nicht abgewandelt werden müssen, nach der Durchführung eines üblichen und bekannten Verfahrens muß - im wesentlichen unabhängig hiervon - lediglich ein weiterer Lackierschritt ausgerührt werden.

Hierbei erweist es sich als weiterer besonderer Vorteil, daß im wesentlichen alle üblicherweise verwendeten Klarlackschichten mit dem erfindungsgemäßen Beschichtungsstoff beschichtet werden können.

Die erfindungsgemäßen Sol-Gel-Überzüge, welche aus den erfindungsgemäßen Beschichtungsstoffen vorzugsweise nach dem erfindungsgemäßen Verfahren hergestellt werden, zeichnen sich durch eine hervorragende Kratzfestigkeit bei sehr guter Haftung, auch nach der Belastung mit Schwitzwasser, aus. Auch die Appearance ist sehr gut. Das erfindungsgemäße Verfahren eignet sich daher insbesondere für die Lackierung von Fahrzeugkarosserien, insbesondere von Automobilkarosserien, mit Mehrschichtlackierungen, die industrielle Lackierung, inklusive Container Coatings, die Kunststofflacklerung und die Möbellackierung.

**Beispiele**

**Herstellbeispiel**

**Die Herstellung des erfindungsgemäßen Sol-Gel-Klarlacks**

**1. Die Herstellung eines Stammlacks**

In einem geeigneten Reaktionsgefäß wurden unter Stickstoff 30 Teile vollentsalztes Wasser, 40 Teile Ethylglykol, 5 Teile Essigsäure (100 %ig), 66,5 Teile Methyltriethoxysilan und 4.7 Teile 3-Glycidyloxypropyl-trimethoxysilan vorgelegt und unter Rühren auf 60 °C erhitzt. Nach weiteren 3 Stunden bei 60 °C wurde die Reaktionsmischung unter Rühren auf 90 °C erhitzt und während 2 Stunden bei dieser Temperatur gehalten. Danach wurden 70 Teile der Reaktionsmischung azeotrop bei 85°C abdestilliert. Nach dem Abkühlen auf Zimmertemperatur wurden der Reaktionsmischung 5 Teile Methoxypropylacetat und 0,1 Teile BYK® 301 (Verlaufsmittel der Firma BYK) zugesetzt. Es resultierte der Stammlack 1 mit einem theoretischen Festkörpergehalt von 37 Gew.-% und einem experimentell ermittelten Festkörpergehalt von 45 Gew.-% (1 Stunde/130 °C).

**2. Die Herstellung eines Acrylatcopolymerisats zur Modifikation des Sol-Gel-Klarlacks**

In einem geeigneten Rührkessel mit Rückflußkühler und Rührer wurden 39 Teile Ethoxyethylpropionat vorgelegt und auf 130 °C erhitzt. In einem ersten Monomerzulaufgefäß wurden 9,598 Teile Butylmethacrylat, 7,708 Teile Methylmethacrylat, 8,003 Teile Styrol, 4,253 Teile Methacrylester 13.0 (Methacrylsäureester mit einem langen Alkylrest im Esterteil) und 9,096 Teile Hydroxyethylacrylat vorgemischt. In einem zweiten Monomerzulaufgefäß wurden 3,810 Teile Hydroxyethylacrylat, 1,831 Teile Acrylsäure und 0,916 Teile Ethoxyethylpropionat vorgelegt. In einen Initiatorzulaufgefäß wurden 3,692 Teile Peroxid TBPEH (tert.-Butylperethylhexanoat) und 6,025 Teile Ethoxyethylpropionat vorgelegt. Der Inhalt des ersten Monomerzulaufgefäßes wurde während vier Stunden gleichmäßig in den Reaktor dosiert. Nach zwei Stunden und 30 Minuten nach dem Beginn des ersten Monomerzulaufs wurde mit dem zweiten Monomerzulauf begonnen. Zu diesem Zweck wurde der Inhalt des zweiten Monomerzulaufgefäßes während einer Stunde und 30 Minuten gleichmäßig in den Reaktor dosiert. Der Inhalt des Initiatorzulaufgefäßes wurde während vier Stunden und 30 Minuten gleichmäßig in den Reaktor dosiert, wobei mit dem Initiatorzulauf fünf Minuten vor dem ersten Monomerzulauf begonnen wurde. Nach dem Zuläufen wurde die resultierende Reaktionsmischung während zwei Stunden bei 130 °C polymerisiert bis ein Originalviskosität von 2,2 dPas, ein Festkörpergehalt von 50 Gew.-% (15 Minuten/180 °C) und eine Säurezahlen von 30 mg KOH/g erreicht waren. Hiernach wurde das Ethoxyethylpropionat im Vakuum bei 100 °C abdestilliert, bis ein Festkörpergehalt von 81 Gew.-% erreicht war. Die resultierende Reaktionsmischung wurde auf 80 °C abgekühlt und mit Butylglykol und Ethoxyethylpropionat (Gewichtsverhältnis 5 : 1) auf einen Festkörpergehalt von 75 Gew.-% eingestellt.

Für die Herstellung des erfindungsgemäßen Sol-Gel-Klarlacks wurde die Lösung des Acrylatcopolymerisats mit Butylglykol auf einen Festkörpergehalt von 20 Gew.-% eingestellt, und es resultierte die Lösung zur organischen Modifikation 2

**3. Die Herstellung eines erfindungsgemäß zu verwendenden Sols**

In einem geeigneten Reaktionsgefäß wurde eine Mischung aus 49,8 Teilen Aluminium-tri-sec-butylat und 106,8 Teilen Methyltriethoxysilan bei 25 °C vorgelegt Zu der Mischung wurden 19,6 Teile Acetessigsäureethylester derart zudosiert, daß die Temperatur der Reaktionsmischung 25 °C nicht überschritt. Nach der Zugabe wurde die Temperatur des Reaktionsmischung auf 40 °C erhöht und während 30 Minuten bei dieser Temperatur gehalten. Danach wurde der Ansatz auf 25 °C abgekühlt, wonach 44 Teile Glycidyloxypropyltrimethoxysilan (GLYMO) zudosiert wurden. Hiernach wurde das Reaktionsgemisch auf 0 °C abgekühlt. Bei dieser Temperatur wurden während 2,5 Stunden 54 Teile 0,1 N Salzsäure zur Vorlage zudosiert. Nach der Zugabe wurde die resultierende Reaktionsmischung bei 25 °C so lange gerührt, bis sie homogen war. Anschließend wurde die Reaktionsmischung auf 75 °C erhitzt, und es wurden bei dieser Temperatur 12,4 Teile Thiodiethanol zudosiert. Die resultierende Reaktionsmischung wurde während 20 Minuten bei 75°C gehalten. Im Anschluß daran wurden bei dieser Temperatur 6 Teile 100 prozentige Essigsäure zudosiert. Die resultierende Reaktionsmischung wurde danach während 24 Stunden bei Raumtemperatur gealtert. Der experimentell ermittelte Festkörpergehalt des resultierenden Sols betrug 35 Gew.-% (15 Minuten/180 °C) Die Viskosität (original) lag bei einem Schergefälle D = 103 s$^{-1}$ bei 70 mPas. Der pH-Wert betrug 3,5. Bis zu seiner Verwendung zur Herstellung des erfindungsgemäßen Sol-Gel-Klarlacks wurde das Sol bei -18 °C gelagert

## 4. Die Herstellung des erfindungsgemäßen Sol-Gel-Klarlacks

Der Sol-Gel-Klarlack 4 wurde erhalten, indem man 12,5 Teile des Sols 3 vorlegte und hierzu nacheinander 35,8 Teile des Stammlacks 1 (45 Gew.-%ig in Ethylglykol), 0,2 Teile BYK® 301, 65 Teile Ethanol und 40 Teile der Lösung zur organischen Modifikation 2 unter Rühren hinzugab und die Bestandteile miteinander vermischte Es resultierte der erfindungsgemäße Sol-Gel-Klarlack 4 mit einem Festkörpergehalt von ca 12 Gew.-%.

**Beispiel**

## 1. Die Herstellung eines erfindungsgemäßen Sol-Gel-Überzugs auf einer mehrschichtigen Lackierung

Auf mit einem handelsüblichen Elektrotauchlack kathodisch beschichteten Stahltafeln (Elektrotauchlackierung mit einer Schichtdicke von 18 - 22 μm) wurde mit einer Becherpistole zunächst ein handelsüblicher Füller von BASF Coatings AG appliziert und eingebrannt. Es resultierte eine Füllerschicht mit einer Schichtdicke von 35 bis 40 μm. Anschließend wurde auf den Füller in gleicher Weise ein handelsüblicher schwarzer Unibasislack der Firma BASF Coatings AG appliziert und während 10 min bei 80 °C vorgetrocknet. Nach dem Kühlen der Tafeln wurde ein Schicht aus einem handelsüblichen Zweikomponenten(2K)-Klarlack (FF98-0015 der Firma BASF Coatings AG) aufgetragen und während 10 min bei 50 °C vorgetrocknet und anschließend während 45 min bei 140 °C zusammen mit dem Basislack vernetzt. Es resultierten eine Basislackschicht einer Stärke von 15 μm und eine Klarlackschicht einer Stärke von 44 μm. Der schwarze Unibasislack wurde gewählt, weil man an den entsprechenden Prüftafeln die Bildung von Kratzer am besten beobachten könnte.
Nach dem Abkühlen wurde der erfindungsgemäße Sol-Gel-Klarlack 4 gemäß dem Herstellbeispiel appliziert, so daß nach dem Aushärten mit mittlerer IR-Strahlung (Abstand des Strahlers von der Oberfläche 18 cm; Strahler: Modul Infrarotstrahler MM S 2000 der Firma Haraeus; Dauer: 5 min; Temperatur: 140°C, gemessen mit einem Thermofühler auf der Rückseite der Prüftafeln) der erfindungsgemäße Sol-Gel-Uberzug einer Stärke von 4,5 μm resultierte.

## 2. Die Prüfung der Eigenschaften des erfindungsgemäßen Sol-Gel-Überzugs

## 2.1 Haftung des Sol-Gel-Überzugs

Die Tabelle 1 gibt einen Überblick über die Gitterschnittests und die hierbei erhaltenen Ergebnisse.

**Tabelle 1: Haftfestigkeit des erfindungsgemaißen Sol-Gel-Überzugs**

| Testmethoden | Beispiel |
|---|---|
| Gitterschnitt nach DIN 53151 (2 mm) [Note 0 bis 5] | 0 |
| Gitterschnitt nach 240 Stunden SKK | 0 |
| und Regeneration von | |
| 1 Stunde | 0 |
| 3 Stunden | 0 |
| 6 Stunden | 0 |
| 24 Stunden | 0 |
| [Note 0 bis 5]: 0 = bester Wert, 5 = schlechtester Wert | |
| SKK = Schwitzwasserkonstantklima nach DIN 50017 | |

Obwohl der Klarlack vor seiner Überschichtung mit dem Sol-Gel-Überzug vollständig eingebrannt worden war, erfolgte keine Enthaftung des Sol-Gel-Überzugs.

## 2.2 Die Kratzfestigkeit des Sol-Gel-Überzugs nach dem Bürstentest

Für diesen Test wurden die Prüftafeln wurden nach Applikation der Lacke mindestens 2 Wochen bei Raumtemperatur gelagert, bevor die Prüfung durchgeführt wurde.

Die Kratzfestigkeit des Sol-Gel-Überzugs auf den Prüftafeln wurde mit Hilfe des in Fig. 2 auf Seite 28 des Artikels von P. Betz und A. Bartelt, Progress in Organic Coatings, 22 (1993), Seiten 27 - 37, beschriebenen BASF-Bürstentests, der allerdings bezüglich des verwendeten Gewichts (2000 g statt der dort genannten 280 g) abgewandelt wurde, folgendermaßen beurteilt:

Bei dem Test wurde die Lackoberfläche mit einem Siebgewebe, welches mit einer Masse belastet wurde, geschädigt. Das Siebgewebe und die Lackoberfläche wurden mit einer Waschmittel-Lösung reichlich benetzt. Die Prüftafel wurde mittels eines Motorantriebs in Hubbewegungen unter dem Siebgewebe vor- und zurückgeschoben

Der Prüfkörper war mit Nylon-Siebgewebe (Nr. 11,31 $\mu$m Maschenweite, Tg 50 °C) bespanntes Radiergummi (4,5 x 2,0 cm, breite Seite senkrecht zur Kratzrichtung). Das Auflagegewicht betrugt 2000 g.

Vor jeder Prüfung wurde das Siebgewebe erneuert, dabei war die Laufrichtung der Gewebemaschen parallel zur Kratzrichtung. Mit einer Pipette wurde ca. 1 ml einer frisch aufgerührten 0,25%igen Persil-Lösung vor dem Radiergummi aufgebracht. Die Umdrehungszahl des Motors wurde so eingestellt, daß in einer Zeit von 80 s 80 Doppelhübe ausgeführt wurden. Nach der Prüfung wurde die verbleibende Waschflüssigkeit mit kaltem Leitungswasser abgespült und die Prüftafel mit Druckluft trockengeblasen.

Hierbei zeigte es sich, daß die erfindungsgemäßen Sol-Gel-Überzüge überhaupt nicht zerkratzt waren.

## 2.3 Die Gleitfähigkeit (Slip) des erfindungsgemäßen Sol-Gel-Überzugs

Der Oberflächen-Slip wurde mit Hilfe des Slipmeßgeräts MOD 9505AE -SERIAL 7035-0689-2 der Firma ALTEK, P.O. Box 1128, Torrington, Connecticut 06790, USA, gemessen. Hierbei wurde mit einer konstanten Kraft ein mit drei Halbkugeln versehenes Gewicht über die Oberfläche der Prüftafeln gezogen. Der hierbei auftretende Reibungswiderstand wurde mit Hilfe eines x/y-Plotters als dimensionslose Größe graphisch dargestellt. Die Höhe des hierbei resultierenden Peaks ist ein relatives Maß für die Gleitfähigkeit der betreffenden Oberfläche: je geringer die Höhe, desto gleitfähiger die Oberfläche.

Bei diesem Test wies der Sol-Gel-Überzug eine relative Peakhöhe von 0,05 auf. Zum Vergleich wies der für die Herstellung der mehrschichtigen Lackierung verwendete handelsübliche Zweikomponenten(2K)-Klarlack (FF98-0015 der Firma BASF Coatings AG) ebenfalls eine relative Peakhöhe von 0,05 auf

## 2.4 Chemikalienbeständigkeit

### 2.4.1 Chemikalienbeständigkeit nach dem MB-Gradientenofen-Test

Bei dem dem Fachmann gutbekannten MB-Gradientenofen-Test wurden die Prüftafeln des Beispiels definiert der Schädigung durch Schwefelsäure, Wasser, Pankreatin, Baumharz und Natronlauge ausgesetzt. Hierzu wurden die Probesubstanzen im Abstand von je einer Segmentbreite (Einstellung des Gradienten auf 30 - 75°C [1°C pro Heizsegment]) aufgetragen. Nach einer Lagerung von 72 Stunden im Normklima 23°C wurden die Prüftafeln auf einem Gradientenofen (z.B. Typ 2615 Fa. BYK-Gardner) während 30 min belastet. Ermittelt wurde die Temperatur, bei der die erste sichtbare Veränderung auftrat.

Die Versuchsergebnisse finden sich in der Tabelle 2.

**Tabelle 2: Chemilkalienbeständigkeit nach dem MB-Gradientenofen-Test**

| Prüfsubstanz | Beispiel 1. Markierung bei °C |
|---|---|
| Schwefelsäure 1%-ig | 54 |
| Wasser dest. | > 75 |
| Pankreatin | 48 |
| Baumharz | > 75 |
| Natronlauge | < 36 |

Die Ergebnisse des MB-Gradientenofen-Tests untermauern die hohe Chemikalienbeständigkeit des erfindungsgemäßen Sol-Gel-Überzugs.

### 2.4.2 Beständigkeit gegenüber Spülmaschinen-Reiniger

Für diesen Test wurde ein Spülmaschinen-Reiniger mit einem pH-Wert von 10,8 verwendet. Die Prüftafeln wurden mit den aus der Tabelle 3 ersichtlichen Mengen an Reiniger in den angegebenen Konzentrationen während 30 Minuten bei 23 °C (Klimaraum) oder 30 °C (Umluftofen) belastet. Die resultierende Schädigung wurde jeweils wie folgt benotet:

| Note | Bedeutung |
|---|---|
| 0 | keine Schädigung |
| 1 | leichte Verfärbung |
| 2 | Verfärbung |
| 3 | Randmarkierung |

Die Tabelle 3 gibt einen Überblick über die erhaltenen Ergebnisse.

**Tabelle 3: Beständigkeit des erfindungsgemäßen Sol-Gel-Überzugs gegenüber Spülmaschinen-Reiniger**

| Menge an Reiniger (ml) | Temperatur (°C) | Konzentration | |
|---|---|---|---|
| | | 1% | 5% |
| 0,025 | 23 | 0 | 0 |
| 0,025 | 30 | 1 | 1 |
| 0,05 | 30 | 0 | 0 |
| 0,075 | 30 | 0 | 0 |
| 0,1 | 30 | 0 | 0 |
| 0,125 | 30 | 0 | 0 |

Die Werte der Tabelle 3 untermauern die hohe Chemikalienstabilität des erfindungsgemäßen Sol-Gel-Überzugs.

### 2.4.3 Beständigkeit gegenüber Natronlauge

### 2.4.3.1 %ige Natronlauge

Bei diesem Test wurden die Prüftafeln mit den aus der Tabelle 4 ersichtlichen Mengen an 1%iger Natronlauge während 30 Minuten bei 30 °C (Umluftofen) belastet. Die resultierende Schädigung wurde jeweils wie folgt benotet:

| Note | Bedeutung |
|---|---|
| 0 | keine Schädigung |
| 1 | leichte Verfärbung |
| 2 | Verfärbung |
| 3 | Randmarkierung |

**Tabelle 4: Beständigkeit des erfindungsgemäßen Sol-Gel-Überzugs gegenüber 1 %iger Natronlauge bei 30 °C**

| Menge an 1%iger Natronlauge (ml) | Note |
|---|---|
| 0,025 | 2 |

(fortgesetzt)

| Menge an 1%iger Natronlauge (ml) | Note |
|---|---|
| 0,05 | 2 |
| 0,075 | 0 |
| 0,1 | 0 |
| 0,125 | 0 |

### 2.4.3.2 Natronlauge unterschiedlicher Konzentrationen

Für diesen Test wurde Natronlauge in unterschiedlichen Konzentrationen und Mengen verwendet. Die Prüftafeln wurden mit den aus der Tabelle 5 ersichtlichen Mengen an Natronlauge in den angegebenen Konzentrationen während 30 Minuten bei 23 °C (Klimaraum) oder 30 °C (Umluftofen) belastet. Die resultierende Schädigung wurde jeweils wie vorstehend angegeben benotet.

**Tabelle 5: Beständigkeit des erfindungsgemäßen Sol-Gel-Überzugs gegenüber Natronlauge unterschiedlicher Konzentrationen**

| Menge an Natronlauge (ml) | Temperatur (°C) | Konzentration | | | | |
|---|---|---|---|---|---|---|
| | | 1% | 2% | 3% | 4% | 5% |
| 0,025 | 23 | 0 | 1 | 1 | 2/3 | 2/3 |
| 0,025 | 30 | 2/3 | 2/3 | 2/3 | 2/3 | - |
| 0,05 | 30 | 2/3 | 2/3 | 2/3 | 2/3 | - |
| 0,075 | 30 | | 2/3 | 2/3 | 2/3 | - |
| 0,1 | 30 | 0 | 1/3 | 2/3 | 2/3 | - |
| 0,125 | 30 | 0 | 1/3 | 1/3 | 2/3 | - |

Die Tests belegen, daß der erfindungsgemäße Sol-Gel-Überzug stabil gegenüber Natronlauge ist.

### 2.5 Steinschlagtest

Der der Fachwelt bekannte Steinschlagtest unter Multi-Stoßbelastung (2x500 Gramm/2 bar) der Firma AUDI AG lieferte einen Kennwert von 3 und einen Rostgrad von 2. Demnach erwies sich der erfindungsgemäße Sol-Gel-Überzug zusammen mit der mehrschichtigen Lackierung als ausreichend stabil gegenüber Steinschlag.

### 2.6 Erichsentiefung

Die Erichsentiefung nach DIN EN ISO 1520: 1995-04 lag bei 0,8 mm.

### 2.7 Appearance

### 2.7.1 Welligkeit

Die Welligkeit des erfindungsgemäßen Sol-Gel-Überzugs wurde mit Hilfe der Wavescan-Vlethode gemessen. Zu diesem Zweck wurde ein Laserstrahl unter einem Winkel von 60° auf die Oberfläche gerichtet, und es wurde auf einer Meßstrecke von 10 cm die Schwankungen des reflektierten Lichts mit Hilfe eines Meßgeräts registriert.

Im sogenannten long wave-Bereich (0.6 bis 10 mm; Beobachtungabstand: 2,5 m) wurde ein Wert von 8,0 ermittelt. Somit waren keine Orangenhautstrukturen oder andere Störungen in der Lackierung vorhanden.

Im sogenannten short wave-Bereich (0,1 bis 0,6 mm: Beobachtungsabstand: 45 cm) wurde ein Wert von 27,9 ermittelt. Somit waren, wenn überhaupt, nur wenige Feinstrukturen in dieser Größenordnung in der Oberfläche vorhanden.

**2.7.2 Glanz und Haze**

Glanz und Haze wurden reflektometrisch unter einem Winkel von 20° mit einem Reflektometer der Firma BYK gemessen Der erfindungsgemäße Sol-Gel-Uberzua wies einen Glanz von 73 und einen Haze von 6 auf und entsprach damit auch in dieser Hinsicht den Anforderungen der Praxis Nach Belastung mit dem Schwitzwasserkonstantklima nach DIN 50017 wies er einen Glanz von 75 und einen Haze von 12 auf, was seine hohe Stabilität gegenüber Schwitzwasser noch einmal untermauerte.

**Patentansprüche**

1. Sol-Gel-Beschichtungsstoff, enthaltend

(A) eine Acrylatcopolymerisatlösung, enthaltend mindestens ein Acrylatcopolymerisat (A1), herstellbar durch Copolymerisation von mindestens den folgenden Monomeren:

a1) mindestens ein im wesentlichen säuregruppenfreier (Meth)acrylsäureester,
a2) mindestens ein ethylenisch ungesättigtes Monomer, das mindestens eine Hydroxylgruppe pro Molekül trägt und im wesentlichen säuregruppenfrei ist, und
a3) mindestens ein mindestens eine Säuregruppe, die in die entsprechende Säureaniongruppe überführbar ist, pro Molekül tragendes ethylenisch ungesättigtes Monomer;

(B) einen Stammlack, herstellbar durch Hydrolyse und Kondensation mindestens eines hydrolysierbaren Silans (B1) der allgemeinen Formel I

$$SiR_4 \qquad (I),$$

worin die Variable R die folgende Bedeutung hat:

R = hydrolysierbare Gruppen, Hydroxygruppen und nicht hydrolysierbare Gruppen, mit der Maßgabe, daß mindestens eine, vorzugsweise mindestens zwei, hydrolysierbare Gruppe(n) vorhanden ist oder sind:

und
(C) ein Sol, herstellbar durch Hydrolyse, Kondensation und Komplexierung

C1) mindestens einer hydrolysierbaren Metallverbindung der allgemeinen Formel II

$$MR_n \qquad (II),$$

worin die Variablen und der Index die folgende Bedeutung haben:

M = Aluminium, Titan oder Zirkonium,
R = hydrolysierbare Gruppen, Hydroxygruppen und nicht hydrolysierbare Gruppen, mit der Maßgabe, daß mindestens eine, vorzugsweise mindestens zwei, hydrolysierbare Gruppe(n) vorhanden ist oder sind, und
n = 3 oder 4;

C2) mindestens einer organischen Thioverbindung der allgemeinen Formel III

$$S(R^1X)_2 \qquad (III),$$

worin die Variablen die folgende Bedeutung haben:

R1 = zweibindiger Rest, welcher sich von mindestens einer der folgenden organischen Verbindungen ableitet:
Substituierte und unsubstiuierte, kein oder mindestens ein Heteroatom in der Kette und/oder im Ring enthaltende, lineare oder verzweigte Alkane, Alkene, Cycloalkane. Cycloalkene, Alkylcycloalkane, Alkylcycloalkene, Alkenylcycloalkane oder Alkenylcycloalkene;
substituierte und unsubstituierte Aromaten oder Heteroamaten; sowie
Alkyl-, Alkenyl-, Cycloalkyl-, Cycloalkenyl-, Alkylcyloalkyl-, Alkylcycloalkenyl-, Alkenylcycloalkyl- oder Alkenylcycloalkenylsubstituierte Aromaten oder Heteroaromaten, deren Substituenten substituiert oder unsubstituiert sind und kein oder mindestens ein Heteroatom in ihrer Kette und/oder ihrem Ring enthalten;
X = -OH, -SH, -NHR2, worin der Rest R2 für ein Wasserstoffatom oder für eine 1 bis 6 C-Atome enthaltende Alkyl- oder Cycloalkylgruppe stehen;

und
C3) mindestens eines hydrolysierbaren Silans der allgemeinen Formel I.

2. Der Sol-Gel-Beschichtungsstoff nach Anspruch 1, **dadurch gekennzeichnet, daß** sich der Rest R[1] von einem unsubstituierten, kein Heteroatom in der Kette enthaltenden, linearen, 2 bis 20 C-Atome enthaltenden Alkan ableitet.

3. Der Sol-Gel-Beschichtungsstoff nach Anspruch 2, **dadurch gekennzeichnet, daß** sich der Rest R[1] von Ethan. Propan, Butan, Pentan und/oder Hexan ableitet.

4. Der Sol-Gel-Beschichtungsstoff nach einem der Ansprüche 1 bis 3, **dadurch gekennzeichnet, daß** X = -OH.

5. Der Sol-Gel-Beschichtungsstoff nach Anspruch 4, **dadurch gekennzeichnet, daß** es sich bei der organischen Thioverbindung um Bis-(2-hydroxyethyl)-sulfid (Thiodiethanol) handelt.

6. Der Sol-Gel-Beschichtungsstoff nach einem der Anspruche 1 bis 5, **dadurch gekennzeichnet, daß** bei der Herstellung des Sols (C) die Kondensation in der Gegenwart mindestens einer organischen Säure, insbesondere Carbonsäure, und/oder mindestens einer anorganischen Säure als Kondensationskatalysator durchgeführt wird.

7. Der Sol-Gel-Beschichtungsstoff nach Anspruch 6, **dadurch gekennzeichnet, daß** das Molverhältnis von Thioverbindung (C2) zu Carbonsäure (Kondensationskatalysator) bei 0.8 : 1 bis 1.2 : 1 liegt.

8. Der Sol-Gel-Beschichtungsstoff nach einem der Ansprüche 1 bis 7, **dadurch gekennzeichnet, daß** als Silane (C3) der allgemeinen Formel I

   - mindestens ein Silan (C3-1) mit vier hydrolysierbaren Gruppen R vorzugsweise drei hydrolysierbaren Gruppen R und einer nicht hydrolysierbaren Gruppe R ohne funktionelle Gruppen, sowie
   - mindestens ein Silan (C3-2) mit mindestens zwei oder drei, insbesondere drei, hydrolysierbaren Gruppen R und einer oder zwei, insbesondere einer, nicht hydrolysierbaren Gruppe R mit mindestens einer, insbesondere einer, funktionellen Gruppe, insbesondere einer Epoxidgruppe,

   verwendet werden

9. Der Sol-Gel-Beschichtungsstoff nach Anspruch 8, **dadurch gekennzeichnet, daß** das Molverhältnis (C3-2): (C3-1) bei 1 : 20 bis 1 : 1 und insbesondere 1 : 6 bis 1 : 2 liegt.

10. Der Sol-Gel-Beschichtunungsstoff nach Anspruch 8 oder 9, **dadurch gekennzeichnet, daß** das Molverhältnis von Thioverbindung (C2) zu Silan (C3-2) bei 1 : 1 bis 1 : 10 und insbesondere 1 : 1,2 bis 1 : 3 liegt.

11. Der Sol-Gel-Beschichtunesstoff nach einem der Ansprüche 1 bis 10, **dadurch gekennzeichnet, daß** das Atomverhältnis von Metall M zu Silizium im Sol (C) bei 1 : 10 bis 1 : 1,5, vorzugsweise 1 : 6 bis 1 : 3, liegt.

12. Der Sol-Gel-Beschichtungsstoff nach einem der Ansprüche 1 bis 11, **dadurch gekennzeichnet, daß** er aromatenfrei ist.

13. Der Sol-Gel-Beschichtungsstoff nach einem der Ansprüche 1 bis 12, **dadurch gekennzeichnet, daß** er, jeweils bezogen auf seine Gesamtmenge, 5 bis 50, vorzugsweise 10 bis 40 und insbesondere 15 bis 30 Gew.-% der Acrylatcopolymerisatlösung (A), 5 bis 40, vorzugsweise 10 bis 35 und insbesondere 15 bis 30 Gew.-% des Stammlacks (B) sowie 1 bis 20, vorzugsweise 2 bis 1 und insbesondere 3 bis 10 Gew.-% des Sols (C) enthält.

**14.** Der Sol-Gel-Beschichtungsstoff nach einem der Ansprüche 1 bis 13, **dadurch gekennzeichnet, daß** die Festkörpergehalte der Bestandteile (A), (B) und (C) in einem Gewichtsverhältnis von (A) : (B) : (C) von (0,5 bis 5) (1 bis 10) : 1, vorzugsweise (1 bis 4) : (2 bis 8) : 1 und insbesondere (1,5 bis 3) : (3 bis 6) : 1 zueinander stehen.

**15.** Der Sol-Gel-Beschichtungsstoff nach einem der Ansprüche 1 bis 14, **dadurch gekennzeichnet, daß** in den allgemeinen Formeln I und II

- die nicht hydrolysierbaren Gruppen R Alkylgrupppen, insbesondere mit 1 bis 4 C-Atomen; Alkenylgruppen, insbesondere mit 2 bis 4 C-Atomen, Alkinylgrupppen, insbesondere mit 2 bis 4 C-Atomen; und/oder Arylgruppen, insbesondere mit 6 bis 10 C-Atomen; und
- die hydrolysierbaren Gruppen R Wasserstoffatome, Alkoxygruppen, insbesondere mit 1 bis 20 C-Atomen, alkoxysubstituierte Alkoxygruppen mit 3 bis 20 C-Atomen; Acyloxygruppen, insbesondere mit 1 bis 4 C-Atomen; Alkylcarbonylgruppen, insbesondere mit 2 bis 6 C-Atomen;

sind.

**16.** Der Sol-Gel-Beschichtungsstoff nach Anspruch 15, **dadurch gekennzeichnet, daß**

- die hydrolysierbaren Gruppen R Methoxy-, Ethoxy-, n-Propoxy-, i-Propoxy, n-Butoxy-, sec.-Butoxy-, beta-Methoxy-ethoxy-, Acetoxy-, Propionyloxy und/oder Acetylgruppen und die
- die nicht hydrolysierbaren Gruppen R Methyl-, Ethyl-, Propyl-, Butyl- Vinyl-, 1-Propenyl-, 2-Propenyl-, Butenyl-, Acetylenyl-, Propargyl-, Phenyl- und/oder Naphthylgruppen sind.

**17.** Der Sol-Gel-Beschichtungsstoff nach einem der Ansprüche 1 bis 16, **dadurch gekennzeichnet, daß** die nicht hydrolysierbaren Gruppen R mindestens eine funktionelle Gruppe, insbesondere mindestens eine Epoxidgruppe, Aminogruppe, olefinisch ungesättigte Gruppe, Mercaptogruppe, und/oder Isocyanatgrupppe und/oder deren Umsetzungsprodukte mit weiteren reaktiven Verbindungen, enthalten.

**18.** Der Sol-Gel-Beschichtungsstoff nach einem der Ansprüche 1 bis 17, **dadurch gekennzeichnet, daß** zur Komplexierung organische Verbindungen verwendet werden, welche Chelatliganden bilden.

**19.** Der Sol-Gel-Bescruchtungsstoff nach einem der Ansprüche 1 bis 18, **dadurch gekennzeichnet, daß** es sich um einen Sol-Gel-Klarlack handelt.

**20.** Die Verwendung des Sol-Gel-Beschichtun-2sstoffs gemäß einem der Ansprüche 1 bis 19 zur Herstellung kratzfester Sol-Gel-Überzüge, insbesondere für einschichtige oder mehrschichtige Lackierungen.

**21.** Die Verwendung des Sol-Gel-Beschichtungsstoffs nach Anspruch 20, **dadurch gekennzeichnet, daß** es sich um ausgehärtete einschichtige oder mehrschichtige Lackierungen handelt.

**22.** Die Verwendung des Sol-Gel-Beschichtungsstoffs nach Anspruch 20 oder 21, **dadurch gekennzeichnet, daß** es sich bei den Lackierungen um Fahrzeugerstlackierungen, Fahrzeugreparaturlackierungen, industrielle Lackierungen, inklusive Container Coatings, Kunststofllackierungen und Möbellackierungen handelt.

**23.** Verfahren zur Herstellung kratzfester Sol-Gel-Überzüge auf einschichtigen oder mehrschichtigen Lackierungen durch

(i) Applikation einer einschichtigen oder mehrschichtigen Lackierung auf einem gegebenenfalls grundierten Substrat,
(ii) Applikation eines Sol-Gel-Beschichtungsstoffs auf der einschichtigen oder mehrschichtigen Lackierung und
(iii) Aushärten des Sol-Gel-Beschichtunasstoffs,

**dadurch gekennzeichnet, daß** man hierbei einen Sol-Gel-Beschichtungsstoff gemäß einem der Ansprüche 1 bis 16 verwendet.

**24.** Das Verfahren nach Anspruch 23, **dadurch gekennzeichnet, daß** man den applizierten Sol-Gel-Beschichtungsstoff durch Bestrahlen mit mittlerer IR-Strahlung aushärtet.

25. Das Verfahren nach Anspruch 23 oder 24, **dadurch gekennzeichnet, daß** die einschichtige oder mehrschichtige Lackierung vollständig ausgehärtet ist.

26. Das Verfahren nach einem der Ansprüche 23 bis 25, **dadurch gekennzeichnet, daß** daß es sich bei den Lackierungen um Automobilerstlackierungen. Autoreparaturlackierungen, industrielle Lackierungen, inklusive Coil Coatings und Container Coatings, Kunststofflacklerungen und Möbellackierungen handelt.

27. Sol-Gel-Uberzüge, herstellbar aus einem Sol-Gel-Beschichtungsstoff gemäß einem der Ansprüche 1 bis 19 und/oder nach dem Verfahren gemäß einem der Ansprüche 23 bis 26

28. Substrate, enthaltend mindestens einen Sol-Gel-Überzug gemäß Anspruch 27.


**Claims**

1. Sol-gel coating material comprising

    (A) an acrylate copolymer solution comprising at least one acrylate copolymer (A1) preparable by copolymerizing at least the following monomers:

    a1) at least one (meth)acrylic ester which is substantially free of acid groups,
    a2) at least one ethylenically unsaturated monomer which bears at least one hydroxyl group per molecule and is substantially free of acid groups, and
    a3) at least one ethylenically unsaturated monomer which bears per molecule at least one acid group which is convertible into the corresponding acid anion group;

    (B) a stock coating material preparable by hydrolysing and condensing at least one hydrolysable silane (B1) of the general formula I

    $$SiR_4 \qquad (I)$$

    where the variable R has the following meaning:

    R = hydrolysable groups, hydroxyl groups and non-hydrolysable groups with the proviso that there is at least one and there are preferably at least two hydrolysable group(s);

    and
    (C) a sol preparable by hydrolysing, condensing and complexing

    C1) at least one hydrolysable metal compound of the general formula II

    $$\mathbf{MR_n} \qquad (II)$$

    where the variables and the index have the following meaning:

    M = aluminium, titanium or zirconium,
    R = hydrolysable groups, hydroxyl groups and non-hydrolysable groups with the proviso that there is at least one and there are preferably at least two hydrolysable group(s), and
    n = 3 or 4;

    C2) at least one organic thio compound of the general formula III

    $$\mathbf{S(R^1X)_2} \qquad (III)$$

    in which the variables have the following meaning:

    $R^1$ = divalent radical deriving from at least one of the following organic compounds :
    substituted and unsubstituted linear or branched alkanes, alkenes, cycloalkanes, cycloalkenes, alkylcycloalkanes, alkylcycloalkenes, alkenylcycloalkanes or alkenylcycloalkenes containing no heteroatom or at least one heteroatom in the chain and/or in the ring;

substituted and unsubstituted aromatics or heteroaromatics; and

alkyl-, alkenyl-, cycloalkyl-, cycloalkenyl-, alkylcycloalkyl-, alkylcycloalkenyl-, alkenylcycloalkyl- or alkenylcycloalkenyl-substituted aromatics or heteroaromatics whose substituents are substituted or unsubstituted and contain no heteroatom or at least one heteroatom in their chain and/or their ring;

$X = -OH, -SH, -NHR^2$, in which the radical $R^2$ is a hydrogen atom or is an alkyl or cycloalkyl group containing 1 to 6 carbon atoms;

and

C3) at least one hydrolysable silane of the general formula I.

2. Sol-gel coating material according to Claim 1, **characterized in that** the radical $R^1$ derives from an unsubstituted, linear alkane containing 2 to 20 carbon atoms but no heteroatom in the chain.

3. Sol-gel coating material according to Claim 2, **characterized in that** the radical $R^1$ derives from ethane, propane, butane, pentane and/or hexane.

4. Sol-gel coating material according to any of Claims 1 to 3, **characterized in that** $X = -OH$.

5. Sol-gel coating material according to Claim 4, **characterized in that** the organic thio compound comprises bis(2-hydroxyethyl) sulfide (thiodiethanol).

6. Sol-gel coating material according to any of Claims 1 to 5, **characterized in that** in the preparation of the sol (C) the condensation is conducted in the presence of at least one organic acid, especially carboxylic acid, and/or at least one inorganic acid as condensation catalyst.

7. Sol-gel coating material according to Claim 6, **characterized in that** the molar ratio of thio compound (C2) to carboxylic acid (condensation catalyst) is 0.8 : 1 to 1.2 : 1.

8. Sol-gel coating material according to any of Claims 1 to 7, **characterized in that** as silanes (C3) of the general formula I

   - at least one silane (C3-1) having four hydrolysable groups R, preferably three hydrolysable groups R and one non-hydrolysable group R without functional groups, and
   - at least one silane (C3-2) having at least two or three, in particular three, hydrolysable groups R and one or two, in particular one, non-hydrolysable group R having at least one, especially one, functional group, in particular an epoxide group,

   are used.

9. Sol-gel coating material according to Claim 8, **characterized in that** the molar ratio (C3-2) : (C3-1) is 1 : 20 to 1 : 1 and especially 1 : 6 to 1 : 2.

10. Sol-gel coating material according to Claim 8 or 9, **characterized in that** the molar ratio of thio compound (C2) to silane (C3-2) is 1 : 1 to 1 : 10 and especially 1 : 1.2 to 1 : 3.

11. Sol-gel coating material according to any of Claims 1 to 10, **characterized in that** the atomic ratio of metal M to silcon in the sol (C) is 1 : 10 to 1 : 1.5, preferably 1 : 6 to 1 : 3.

12. Sol-gel coating material according to any of Claims 1 to 11, **characterized in that** it is aromatics-free.

13. Sol-gel coating material according to any of Claims 1 to 12, **characterized in that** it comprises, in each case based on its total amount, 5 to 50, preferably 10 to 40 and especially 15 to 30% by weight of the acrylate copolymer solution (A), 5 to 40, preferably 10 to 35 and especially 15 to 30% by weight of the stock coating material (B) and also 1 to 20, preferably 2 to 15 and especially 3 to 10% by weight of the sol (C).

14. Sol-gel coating material according to any of Claims 1 to 13, **characterized in that** the solids contents of the constituents (A), (B) and (C) are in a weight ratio with respect to one another of (A) : (B) : (C) of (0.5 to 5) : (1 to 10) : 1, preferably (1 to 4) : (2 to 8) : 1 and especially (1.5 to 3) : (3 to 6) : 1.

**15.** Sol-gel coating material according to any of Claims 1 to 14, **characterized in that**, in the general formulae I and II,

- the non-hydrolysable groups R are alkyl groups, especially of 1 to 4 carbon atoms; alkenyl groups, especially of 2 to 4 carbon atoms; alkynyl groups, especially of 2 to 4 carbon atoms; and/or aryl groups, especially of 6 to 10 carbon atoms; and
- the hydrolysable groups R are hydrogen atoms, alkoxy groups, especially of 1 to 20 carbon atoms; alkoxy-substituted alkoxy groups of 3 to 20 carbon atoms; acyloxy groups, especially of 1 to 4 carbon atoms; alkylcarbonyl groups, especially of 2 to 6 carbon atoms.

**16.** Sol-gel coating material according to Claim 15, **characterized in that**

- the hydrolysable groups R are methoxy, ethoxy, n-propoxy, i-propoxy, n-butoxy, sec-butoxy, beta-methoxyethoxy, acetoxy, propionyloxy and/or acetyl groups and the
- non-hydrolysable groups R are methyl, ethyl, propyl, butyl, vinyl, 1-propenyl, 2-propenyl, butenyl, acetylenyl, propargyl, phenyl and/or naphthyl groups.

**17.** Sol-gel coating material according to any of Claims 1 to 16, **characterized in that** the non-hydrolysable groups R contain at least one functional group, especially at least one epoxide group, amino group, olefinically unsaturated group, mercapto group and/or isocyanate group and/or their reaction products with further reactive compounds.

**18.** Sol-gel coating material according to any of Claims 1 to 17, **characterized in that** complexing is effected using organic compounds which form chelate ligands.

**19.** Sol-gel coating material according to any of Claims 1 to 18, **characterized in that** it is a sol-gel clearcoat material.

**20.** Use of Sol-gel coating material according to any of Claims 1 to 19 for producing mar-resistant sol-gel coatings, especially for single-coat or multicoat paint systems.

**21.** Use of Sol-gel coating material according to Claim 20, **characterized in that** cured single-coat or multicoat paint systems are concerned.

**22.** Use of Sol-gel coating material according to Claim 20 or 21, **characterized in that** the paint systems are vehicle original equipment manufacturing coatings, vehicle repair coatings, industrial coatings, including container coatings, plastics coatings and furniture coatings.

**23.** Process for producing mar-resistant sol-gel coatings on single-coat or multicoat paint systems by

(i) applying a single-coat or multicoat paint system to a primed or unprimed substrate,
(ii) applying a sol-gel coating material atop the single-coat or multicoat paint system, and
(iii) curing Sol-gel coating material,

**characterized in that** a sol-gel coating material according to any of Claims 1 to 16 is used.

**24.** Process according to Claim 23, **characterized in that** the applied sol-gel coating material is cured by irradiation with intermediate IR radiation.

**25.** Process according to Claim 23 or 24, **characterized in that** the single-coat or multicoat paint system has been completely cured.

**26.** Process according to any of Claims 23 to 25, **characterized in that** the paint systems are automotive original equipment manufacturing coatings, automotive repair coatings, industrial coatings, including coil coatings and container coatings, plastics coatings and furniture coatings.

**27.** Sol-gel coatings preparable from a sol-gel coating material according to any of Claims 1 to 19 and/or by the process according to any of Claims 23 to 26.

**28.** Substrates comprising at least one sol-gel coating according to Claim 27.

**Revendications**

**1.** Produit de revêtement sol-gel, contenant

(A) une solution de copolymérisat d'acrylate, contenant au moins un copolymérisat d'acrylate (A1), pouvant être fabriqué par copolymérisation d'au moins les monomères suivants :

a1) au moins un ester d'acide (méth)acrylique sensiblement exempt de groupes acide,
a2) au moins un monomère non saturé au plan éthylénique, qui porte au moins un groupe hydroxyle par molécule et est sensiblement exempt de groupes acide, et
a3) au moins un monomère non saturé au plan éthylénique, portant par molécule au moins un groupe acide, qui peut être transformé dans le groupe d'anion d'acide correspondant ;

(B) une laque de base pouvant être fabriquée par hydrolyse et condensation d'au moins un silane hydrolysable (B1) de la formule générale I

$$SiR_4 \qquad (I),$$

dans laquelle la variable R a la signification suivante :

R = groupes hydrolysables, groupes hydroxyle et groupes non hydrolysables à condition qu'au moins un, de préférence au moins deux, groupe(s) hydrolysable(s) soit (soient) présent(s);

et
(C) un sol pouvant être fabriqué par hydrolyse, condensation et complexation

C1) d'au moins un composé de métal hydrolysable de la formule générale II

$$MR_n \qquad (II),$$

dans laquelle les variables et l'indice ont la signification suivante :

M = aluminium, titane ou zirconium,
R = groupes hydrolysables, groupes hydroxyle et groupes non hydrolysables à condition qu'au moins un, de préférence au moins deux, groupe(s) hydrolysable(s) soit (soient) présent(s), et
n = 3 ou 4 ;

C2) d'au moins un composé thio organique de formule générale III

$$S(R^1X)_2 \qquad (III),$$

dans laquelle les variables ont la signification suivante :

R1 = radical bivalent dérivé d'au moins l'un des composés organiques suivants :

alcanes, alcènes, cycloalkanes, cycloalcènes, alkylcycloalcanes, alkylcycloalcènes, alcénylcycloalcanes ou alcénylcycloalcènes, linéaires ou ramifiés, substitués ou non substitués, renfermant zéro ou au moins un hétéroatome dans la chaîne et/ou dans le noyau ;
composés aromatiques ou hétéroaromatiques substitués ou non substitués ; et
composés aromatiques ou hétéroaromatiques substitués par alkyle, alcényle, cycloalkyle, cycloalcényle, alkylcycloalkyle, alkylcycloalcényle, alcénylcycloalkyle ou alcénylcycloalcényle, dont les substituants sont substitués ou non substitués et renferment zéro ou au moins un hétéroatome dans leur chaîne et/ou leur noyau ;

X = -OH, -SH, -NHR2, où le radical R2 représente un atome d'hydrogène ou un groupe alkyle ou cycloalkyle renfermant de 1 à 6 atomes de carbone ;

et

C3) d'au moins un silane hydrolysable de la formule générale I.

**2.** Produit de revêtement sol-gel selon la revendication 1, **caractérisé en ce que** le radical R$^1$ est dérivé d'un alcane linéaire, non substitué, comprenant de 2 à 20 atomes de carbone et ne renfermant aucun hétéroatome dans la chaîne.

**3.** Produit de revêtement sol-gel selon la revendication 2, **caractérisé en ce que** le radical R$^1$ est dérivé de l'éthane, du propane, du butane, du pentane et/ou de l'hexane.

**4.** Produit de revêtement sol-gel selon l'une quelconque des revendications 1 à 3, **caractérisé en ce que** X = OH.

**5.** Produit de revêtement sol-gel selon la revendication 4, **caractérisé en ce que** le composé thio organique est le sulfure de bis(2-hydroxyéthyle) (thiodiéthanol).

**6.** Produit de revêtement sol-gel selon l'une quelconque des revendications 1 à 5, **caractérisé en ce que** lors de la préparation du sol (C), la condensation est effectuée en présence d'au moins un acide organique, en particulier d'un acide carboxylique, et/ou d'au moins un acide inorganique en tant que catalyseur de condensation.

**7.** Produit de revêtement sol-gel selon la revendication 6, **caractérisé en ce que** le rapport molaire entre le composé thio (C2) et l'acide carboxylique (catalyseur de condensation) est de 0,8 : 1 à 1,2 : 1.

**8.** Produit de revêtement sol-gel selon l'une quelconque des revendications 1 à 7, **caractérisé en ce que** l'on utilise, en tant que silane (C3) de formule générale I,

- au moins un silane (C3-1) ayant quatre groupes R hydrolysables, de préférence trois groupes R hydrolysables, et un groupe R non hydrolysable sans groupe fonctionnel, ainsi que
- au moins un silane (C3-2) ayant au moins deux ou trois, en particulier trois groupes R hydrolysables, et un ou deux, en particulier un groupe(s) R non hydrolysable(s) ayant au moins un, en particulier un groupe fonctionnel, en particulier un groupe époxyde.

**9.** Produit de revêtement sol-gel selon la revendication 8, **caractérisé en ce que** le rapport molaire (C3-2) : (C3-1) est de 1 : 20 jusqu'à 1 : 1 et en particulier de 1 : 6 jusqu'à 1 : 2.

**10.** Produit de revêtement sol-gel selon la revendication 8 ou 9, **caractérisé en ce que** le rapport molaire du composé thio (C2) sur le silane (C3-2) est de 1 : 1 jusqu'à 1 : 10 et en particulier de 1 : 1,2 jusqu'à 1 : 3.

**11.** Produit de revêtement sol-gel selon l'une quelconque des revendications 1 à 10, **caractérisé en ce que** le rapport atomique du métal M par rapport au silicium dans le sol (C) est de 1 : 10 jusqu'à 1 : 1,5, de préférence de 1 : 6 jusqu'à 1 : 3.

**12.** Produit de revêtement sol-gel selon l'une quelconque des revendications 1 à 11, **caractérisé en ce qu'**il est exempt de composés aromatiques.

**13.** Produit de revêtement sol-gel selon l'une quelconque des revendications 1 à 12, **caractérisé en ce qu'**il contient par rapport à sa quantité globale, 5 à 50, de préférence 10 à 40, et en particulier 15 à 30 % de poids de la solution de copolymérisat d'acrylate (A), 5 à 40, de préférence 10 à 35 et en particulier 15 à 30 % de poids de la laque de base (B) et 1 à 20, de préférence 2 à 15 et en particulier 3 à 10 % de poids du sol (C).

**14.** Produit de revêtement sol-gel selon l'une quelconque des revendications 1 à 13, **caractérisé en ce que** les teneurs en matières solides des constituants (A), (B) et (C) sont en un rapport molaire de (A) : (B) : (C) de (0,5 à 5) : (1 à 10) : 1, de préférence de (1 à 4) : (2 à 8) : 1, et en particulier de (1,5 à 3) : (3 à 6) : 1.

**15.** Produit de revêtement sol-gel selon l'une quelconque des revendications 1 à 14, **caractérisé en ce que**, dans les formules générales I et II

- les groupes R non hydrolysables sont des groupes alkyle, en particulier avec 1 à 4 atomes de carbone ; des groupes alcényle, en particulier avec 2 à 4 atomes de carbone ; des groupes alkynyle, en particulier avec 2 à 4 atomes de carbone; et/ou des groupes aryle, en particulier avec 6 à 10 atomes de carbone ; et
- les groupes R hydrolysables sont des atomes d'hydrogène, des groupes alcoxy, en particulier avec 1 à 20 atomes de carbone ; des groupes alcoxy substitués par alcoxy avec 3 à 20 atomes de carbone ; des groupes acyloxy, en particulier avec 1 à 4 atomes de carbone ; des groupes alkylcarbonyle, en particulier avec 2 à 6 atomes de carbone.

**16.** Produit de revêtement sol-gel selon la revendication 15, **caractérisé en ce que**

> - les groupes hydrolysables R sont des groupes méthoxy, éthoxy, n-propoxy, i-propoxy, n-butoxy, sec-butoxy, bêta-méthoxy-éthoxy, acétoxy, propionyloxy et/ou acétyle et les
> - les groupes R non hydrolysables sont des groupes méthyle, éthyle, propyle, butyle, vinyle, 1-proponyle, 2-proponyle, buténoyle, acétylényle, propargyle, phényle et/ou des groupes naphtyle.

**17.** Produit de revêtement sol-gel selon l'une quelconque des revendications 1 à 16, **caractérisé en ce que** les groupes R non hydrolysables contiennent au moins un groupe fonctionnel, en particulier au moins un groupe époxy, un groupe amino, un groupe oléfiniquement insaturé, un groupe mercapto, et/ou un groupe isocyanate et/ou leurs produits de réaction avec d'autres composés réactifs.

**18.** Produit de revêtement sol-gel selon l'une quelconque des revendications 1 à 17, **caractérisé en ce qu'**on utilise, pour la complexation, des composés organiques qui forment des ligands de chélate.

**19.** Produit de revêtement sol-gel selon l'une quelconque des revendications 1 à 18, **caractérisé en ce qu'**il s'agit d'une laque transparente sol-gel.

**20.** Utilisation du produit de revêtement sol-gel selon l'une quelconque des revendications 1 à 19 pour la fabrication de revêtements sol-gel résistants aux rayures, en particulier pour des peintures à une couche ou à plusieurs couches.

**21.** Utilisation du produit de revêtement sol-gel selon la revendication 20, **caractérisée en ce qu'**il s'agit de peintures durcies à une couche ou à plusieurs couches.

**22.** Utilisation du produit de revêtement sol-gel selon la revendication 20 ou 21, **caractérisée en ce que** les peintures sont des premières peintures automobiles, des peintures pour réparation automobile, des peintures industrielles, y compris les Container Coatings, des peintures pour plastiques et des peintures pour meubles.

**23.** Procédé pour la fabrication de revêtements sol-gel résistants aux rayures sur des peintures à une couche ou à plusieurs couches par

> (i) application d'une peinture à une couche ou à plusieurs couches sur un substrat éventuellement revêtu d'un apprêt,
> (ii) application d'un produit de revêtement sol-gel sur la peinture à une couche ou à plusieurs couches et
> (iii) durcissement du produit de revêtement sol-gel,

**caractérisé en ce qu'**on utilise dans le cas présent un produit de revêtement sol-gel selon l'une quelconque des revendications 1 à 16.

**24.** Procédé selon la revendication 23, **caractérisé en ce qu'**on durcit le produit de revêtement sol-gel appliqué par irradiation avec un rayonnement infrarouge moyen.

**25.** Procédé selon la revendication 23 ou 24, **caractérisé en ce que** la peinture à une couche ou à plusieurs couches est complètement durcie.

**26.** Procédé selon l'une quelconque des revendications 23 à 25, **caractérisé en ce que** les peintures sont des premières peintures automobiles, des peintures pour réparation automobile, des peintures industrielles, y compris les Coil Coatings et Container Coatings, des peintures pour plastiques et des peintures pour meubles.

**27.** Revêtements sol-gel, pouvant être fabriqués à partir d'un produit de revêtement sol-gel selon l'une quelconque des revendications 1 à 19 et/ou selon le procédé conforme à l'une quelconque des revendications 23 à 26.

**28.** Substrats, contenant au moins un revêtement sol-gel selon la revendication 27.